# EUROPÄISCHE PATENTSCHRIFT

(11) **EP 4 502 383 B1**
(45) Veröffentlichungstag und Bekanntmachung des Hinweises auf die Patenterteilung: **11.11.2026**
(21) Anmeldenummer: 24190823.5
(22) Anmeldetag: 25.07.2024
(51) Int. Cl.: F04C 18/16, F04C 28/06, F04C 28/08, F04C 28/28

(54) **VERDICHTER-/EXPANDERMASCHINE**
COMPRESSOR/EXPANDER MACHINE
MACHINE DE COMPRESSION/DÉTENDEUR

(30) Priorität: 01.08.2023 DE 102023120370
(43) Veröffentlichungstag der Anmeldung: 05.02.2025
(73) Patentinhaber: BITZER Kühlmaschinenbau GmbH, 71065 Sindelfingen (DE)
(72) Erfinder: Blumhardt, Marcus, 71277 Rutesheim (DE); Nill, Jürgen, 72116 Mössingen (DE)
(74) Vertreter: Hoeger, Stellrecht & Partner Patentanwälte mbB

(56) Entgegenhaltungen:
- DE-A1- 102016 109 907
- US-A1- 2006 222 510
- US-A1- 2008 063 536

## Beschreibung

Die Erfindung betrifft ein Verfahren zum Betreiben einer Verdichter-/Expandermaschine in einem Kreislauf für ein Arbeitsmedium, wobei die Verdichter-/Expandermaschine ein Maschinengehäuse mit einem Schraubenläufergehäuse aufweist, in welchem mindestens ein zwischen einer Niederdruckseite und einer Hochdruckseite angeordneter Schraubenläufer zum Verdichten/Expandieren des Arbeitsmediums angeordnet ist und mit einer Motor-/Generatoreinheit gekoppelt ist. Die Druckschrift US 2006/222510 A1 offenbart ein Verfahren zum Betreiben eines Verdichters mit einem kontrollierten Abschalten.

Bei einem derartigen Verfahren besteht das Problem, dass beim Abschalten der Verdichter-/Expandermaschine Beschädigungen im Bereich des mindestens einen Schraubenläufers, insbesondere im Bereich der hochdruckseitigen Endflächen des mindestens einen Schraubenläufers und der diesen Endflächen gegenüberliegenden Endwandflächen des Maschinengehäuses auftreten, die verschiedenste Ursachen haben, beispielsweise die Druckdifferenz zwischen der Hochdruckseite und der Niederdruckseite sowie gegebenenfalls eine Umkehr der Drehrichtung der Schraubenläufer oder eine Unterbrechung der Schmierung im Bereich des mindestens einen Schraubenläufers.

Der Erfindung liegt daher die Aufgabe zugrunde, ein Verfahren der eingangs beschriebenen Art dahingehend zu verbessern, dass Beschädigungen im Bereich des mindestens einen Schraubenläufers vermieden werden.

Diese Aufgabe wird durch die Merkmale des Verfahrensanspruchs 1 bzw. des Vorrichtungsanspruchs 10 gelöst. 1

Erfindungsgemäß ist zum Betrieb der Verdichter-/Expandermaschine eine Betriebssteuereinheit vorgesehen, welche im Fall einer Beendigung des Betriebs der Verdichter-/Expandermaschine die Motor-/Generatoreinheit gemäß einem vorgegebenen Drehzahlverlauf bis zum Erreichen eines Beschädigungen im Bereich der Schraubenläufer verhindernden Niedrigstdrehzahlbereichs des mindestens einen der Schraubenläufer betreibt, dass die Betriebssteuereinheit die Motor-/Generatoreinheit im Anschluss an die Abbremsrampe in dem Niedrigstdrehzahlbereich des mindestens einen Schraubenläufers weiterbetreibt, welcher eine derart geringe Drehzahl des mindestens einen der Schraubenläufer zur Folge hat, dass im Bereich des Dichtspalts zwischen der hochdruckseitigen Endfläche des mindestens einen der Schraubenläufer und der jeweiligen Endwandfläche keine Abrasionen, Erhitzungen oder Überhitzungen auftreten, dass der Niedrigstdrehzahlbereich sich von einer Drehzahl des mindestens einen der Schraubenläufer von 20 Hz bis 0 Hz erstreckt, dass die Betriebssteuereinheit den Niedrigstdrehzahlbereich des mindestens einen Schraubenläufers während einer vorgegebenen Haltezeit aufrecht erhält, welche mindestens 3 Sekunden beträgt.

Der Vorteil dieser Lösung ist darin zu sehen, dass durch den vorgegebenen Drehzahlverlauf eine definierte Reduktion der Drehzahl des Schraubenläufers bis hin zu einem Niedrigstdrehzahlbereich des mindestens einen Schraubenläufers möglich ist, so dass dadurch die voranstehend genannten Probleme vermieden werden.

Besonders günstig ist es, wenn der Drehzahlverlauf der Motor-/Generatoreinheit durch eine zeitlich aufeinanderfolgende Sequenz von Drehzahldaten vorgegeben ist, die beispielsweise auch aufeinanderfolgende Drehzahlstufen aufweisen kann.

Diese zeitlich aufeinanderfolgende Sequenz von Drehzahldaten können auch eine Variation der Drehzahl über der Zeit vorsehen.

Besonders günstig ist es jedoch, wenn die zeitlich aufeinanderfolgenden Drehzahldaten aufeinanderfolgende, stets niedriger werdende Drehzahlwerte aufweisen.

Dabei könnten die Drehzahlwerte nach wie vor gestaffelt zeitlich aufeinanderfolgen.

Die Erfindung sieht jedoch vor, dass die Drehzahlwerte eine Abbremsrampe über der Zeit bilden, das heißt, dass eine zusammenhängende Folge von stets niedriger werdenden Drehzahlwerten, welche die Abbremsrampe über der Zeit bilden, vorliegt.

Besonders günstig ist es, wenn die Drehzahlwerte der Abbremsrampe gemäß mindestens einem Gradient über der Zeit abnehmen.

Vorzugsweise ist dabei vorgesehen, dass die Abbremsrampe eine Brems-Startrampe aufweist, bei welcher die Drehzahlwerte gemäß einem ersten Gradient über der Zeit abnehmen.

Noch besser ist es, wenn die Abbremsrampe eine sich an die Brems-Startrampe anschließende Endbremsrampe aufweist, bei welcher die Drehzahlwerte gemäß einem zweiten Gradient über der Zeit abnehmen, um zunächst mit dem ersten Gradient eine starke Reduzierung der Drehzahl der Schraubenläufer zu erreichen und durch den anschließenden zweiten Gradient der Endbremsrampe einen möglichst sanften Übergang zu dem Niedrigstdrehzahlbereich des mindestens einen Schraubenläufers zu erreichen.

Um sicherzugehen, dass der mindestens eine Schraubenläufer nicht wieder eine Beschleunigung erfährt, ist erfindungsgemäß vorgesehen, dass die Betriebssteuereinheit die Motor-/Generatoreinheit im Anschluss an die Abbremsrampe in dem Niedrigstdrehzahlbereich des mindestens einen Schraubenläufers weiterbetreibt.

Dabei hat der Niedrigstdrehzahlbereich eine derart geringe Drehzahl des mindestens einen Schraubenläufers zur Folge, dass im Bereich des Dichtspalts zwischen den hochdruckseitigen Endflächen des Schraubenläufers und den Endwandflächen keine Abrasionen, Erhitzungen oder Überhitzungen auftreten.

Dabei liegt der Niedrigstdrehzahlbereich des mindestens einen Schraubenläufers im Bereich einer Drehzahl des mindestens einen Schraubenläufers, die sich von 20 Hz bis 0 Hz erstreckt.

Vorzugsweise erstreckt sich der Niedrigstdrehzahlbereichdes mindestens einen Schraubenläufers von einer Drehzahl von 5 Hz bis 0 Hz, noch besser ist es, wenn sich der Niedrigstrehzahlbereich des mindestens einen der Schraubenläufer von einer Drehzahl von 3 Hz bis 0 Hz erstreckt, im Extremfall beträgt die Drehzahl 0 Hz.

Erfindungsgemäß erhält die Betriebssteuereinheit den Niedrigstdrehzahlbereich des mindestens einen Schraubenläufers während einer vorgegebenen Haltezeit von mindestens drei Sekunden aufrecht, so dass der Zeitraum der Einwirkung auf den mindestens einen Schraubenläufer begrenzt werden kann.

Noch besser ist es, wenn die Haltezeit mindestens fünf Sekunden beträgt. Zweckmäßigerweise ist vorgesehen, dass die Haltezeit so lange aufrechterhalten wird, dass davon ausgegangen werden kann, dass in der Verdichter-/Expandermaschine keine auf den mindestens einen Schraubenläufer wirkenden Druckdifferenzen zwischen der Niederdruckseite und der Hochdruckseite mehr vorliegen.

Zweckmäßigerweise ist dabei vorgesehen, dass die Haltezeit maximal drei Minuten beträgt.

Noch besser ist es, wenn die Haltezeit maximal eine Minute beträgt.

Alternativ dazu ist es vorteilhaft, wenn die Betriebssteuereinheit den Niedrigstdrehzahlbereich des mindestens einen Schraubenläufers so lange aufrecht erhält, bis in der Verdichter-/Expandermaschine keine auf die Schraubenläufer beschleunigend wirkenden Druckdifferenzen zwischen der Niederdruckseite und der Hochdruckseite mehr vorliegen.

Hierzu ist zweckmäßiger Weise eine Erfassung der Druckdifferenzen mittels Sensoren vorgesehen.

Eine vorteilhafte Lösung sieht dabei vor, dass die Betriebssteuereinheit im Normalbetrieb die Verdichter-/Expandermaschine in einem Normalbetriebsmodus arbeitet, in welchem eine Regelung der Drehzahl des Schraubenläufers durch eine übergeordnete Steuerung des Kreislaufs erfolgt.

Um sicherzustellen, dass beim Vorliegen von Signalen, die eine Beendigung des Betriebs der Verdichter-/Expandereinheit erfordern, die Betriebssteuereinheit eine Beendigung des Betriebs der Verdichter-/Expandereinheit gemäß der erfindungsgemäßen Lösung durchführt, ist vorgesehen, dass die Betriebssteuereinheit im Normalbetriebsmodus von einem Überwachungsmodus überwacht wird, welcher Signale erfasst, die eine Beendigung des Betriebs der Verdichter-/Expandereinheit im Normalbetriebsmodus erfordern, und dass die Betriebssteuereinheit bei Vorliegen eines derartigen Signals in einen Betriebsbeendigungsmodus übergeht.

In einem derartigen Fall ist vorzugsweise vorgesehen, dass im Betriebsbeendigungsmodus die Motor-/Generatoreinheit gemäß dem vorgegebenen Drehzahlverlauf zur Beendigung des Betriebs der Verdichter-/Expandermaschine betrieben wird.

Um auch bei dem Betriebsbeendigungsmodus zu erkennen, inwieweit der Niedrigstdrehzahlbereich des mindestens einen Schraubenläufers erreicht ist, wird der Betriebsbeendigungsmodus durch einen Drehzahlüberwachungsmodus überwacht, welcher ein Erreichen des Niedrigstdrehzahlbereich des mindestens einen Schraubenläufers erfasst.

Insbesondere ist dabei bei dem Drehzahlüberwachungsmodus vorgesehen, dass der Drehzahlüberwachungsmodus bei Erreichen des Niedrigstdrehzahlbereich einen Übergang in einen Haltemodus einleitet, in welchem ein Aufrechterhalten der Drehzahl des mindestens einen Schraubenläufers im Niedrigstdrehzahlbereich über eine definierte Haltezeit erfolgt, die sicherstellt, dass bei deren Beendigung keine auf den mindestens einen Schraubenläufer beschleunigend einwirkenden Druckdifferenzen vorliegen, so dass dadurch auch keine Einwirkung auf den mindestens einen Schraubenläufer erfolgt, die zu Beschädigungen im Bereich des mindestens einen Schraubenläufers führen können.

Alternativ dazu ist vorgesehen, dass der Drehzahlüberwachungsmodus bei Erreichen des Niedrigstdrehzahlbereichs einen Übergang in einen Haltemodus einleitet, in welchem ein Aufrechterhalten der Drehzahl des mindestens einen Schraubenläufers im Niedrigstdrehzahlbereich so lange erfolgt, bis keine auf den mindestens einen Schraubenläufer beschleunigend einwirkende Druckdifferenzen vorliegen, so dass dadurch auch keine Einwirkung auf den mindestens einen Schraubenläufer erfolgt, die zu Beschädigungen im Bereich des mindestens einen Schraubenläufers führen können.

Des Weiteren ist vorzugsweise vorgesehen, dass die Betriebssteuereinheit während des Betriebsbeendigungsmodus und/oder während des Haltemodus eine Druckentlastung zwischen der Niederdruckseite und der Hochdruckseite der Verdichter-/Expandermaschine aktiviert, um dadurch keine Einwirkungen von insbesondere signifikanten Druckdifferenzen auf den mindestens einen Schraubenläufer zumindest bei Beendigung des Haltemodus sicherzustellen.

Bei der voranstehend beschriebenen Verdichter-/Expandermaschine ist insbesondere vorgesehen, dass diese in dem Schraubenläufergehäuse zwei ineinandergreifende Schraubenläufer aufweist.

Ferner sieht eine besonders vorteilhafte Ausführungsform vor, dass die Verdichter-/Expandermaschine und die Motor-/Generatoreinheit in einem Gesamtgehäuse angeordnet sind.

Eine erfindungsgemäße Verdichtermaschine ist beispielsweise in einem Kühlkreislauf oder einem Wärmepumpenkreislauf oder einer Dampfkompressionsanlage angeordnet.

In dem speziellen Fall, dass die Verdichter-/Expandermaschine als Verdichtermaschine arbeitet, ist vorgesehen, dass die Betriebssteuereinheit als Verdichterbetriebssteuereinheit ausgebildet ist und einen Umrichter umfasst, welcher einen Gleichrichter aufweist, der aus einem AC-Versorgungsnetz einen DC-Zwischenkreis speist, und dass der Umrichter einen Wechselrichter aufweist, welcher aus dem DC-Zwischenkreis die Motoreinheit der Verdichtermaschine speist.

Des Weiteren ist vorzugsweise vorgesehen, dass die Verdichterbetriebssteuereinheit eine den Umrichter steuernde Steuereinheit aufweist, wobei beispielsweise die Steuereinheit auch in den Umrichter integriert sein kann.

Prinzipiell könnte die Steuereinheit sowohl den Wechselrichter als auch den Gleichrichter steuern. Aus Gründen der Einfachheit ist es besonders vorteilhaft, wenn die Steuereinheit zur Steuerung der Drehzahl der Motoreinheit den Wechselrichter des Umrichters, insbesondere nur den Wechselrichter des Umrichters, ansteuert, da eine Rückwirkung des Gleichrichters auf das Versorgungsnetz bei dieser vereinfachten Lösung nicht vorgesehen ist.

Insbesondere ist die Steuereinheit so ausgebildet, dass diese durch Ansteuerung des Wechselrichters die Drehzahl der Motoreinheit beim Betrieb der Verdichtermaschine in einem Normalbetriebsmodus entsprechend einem Signal steuert, welches von einer übergeordneten Steuerung zum Betrieb des Kreislaufs erzeugt wird.

Besonders zweckmäßig ist es hierbei, wenn die Steuereinheit mit einem Überwachungsmodus den Normalbetriebsmodus ständig daraufhin überprüft, ob der Normalbetriebsmodus aufrecht erhalten oder beendet werden soll, um sicherzustellen, dass keine unzulässige Weiterführung des Normalbetriebsmodus erfolgt.

Insbesondere ist hierbei vorgesehen, dass die Steuereinheit im Überwachungsmodus bei Vorliegen eines der Steuereinheit übermittelten Abschaltsignals einen Betriebsbeendigungsmodus aktiviert und dabei ein Übergang von dem Normalbetriebsmodus in den Betriebsbeendigungsmodus einleitet.

Erfindungsgemäß ist hierbei vorgesehen, dass die Steuereinheit in dem Betriebsbeendigungsmodus den Betrieb der Verdichtermaschine gemäß dem Verfahren nach Anspruch 1 betreibt.

Ferner ist vorzugsweise vorgesehen, dass die Steuereinheit den Betriebsbeendigungsmodus mit einem Drehzahlüberwachungsmodus überwacht, um zu erkennen, ob der Niedrigstdrehzahlbereich des mindestens einen Schraubenläufers erreicht ist.

Eine erfindungsgemäße Expandermaschine ist beispielsweise in einem thermodynamischen Kreisprozess, insbesondere einer ORC Anlage oder einer Dampfexpansionsanlage, angeordnet.

Daher sieht eine weitere vorteilhafte Lösung vor, dass die Verdichter-/Expandermaschine als Expandermaschine arbeitet, dass die Betriebssteuereinheit als Expanderbetriebssteuereinheit ausgebildet ist und einen Umrichter umfasst, der einen Netzwechselrichter aufweist, der seinerseits mit einem AC-Versorgungsnetz verbunden ist, und in einen DC-Zwischenkreis Energie vom AC-Versorgungsnetz einspeist oder Energie aus dem DC-Zwischenkreis in das AC-Versorgungsnetz einspeist, dass die Expanderbetriebssteuereinheit einen Kompressor-Wechselrichter aufweist, welcher aus dem DC-Zwischenkreis einen Motor für einen Kompressor für einen in einem thermodynamischen Kreisprozess betriebenen Kreislauf speist, dass die Expanderbetriebssteuereinheit einen Generator-Wechselrichter aufweist, welcher von der Generatoreinheit zugeführte Energie in den DC-Zwischenkreis einspeist.

Mit einem derart speziell ausgebildeten Umrichter lässt sich die Expandermaschine in den jeweiligen Betriebszuständen vorteilhaft steuern.

Insbesondere ist auch vorgesehen, dass der Generator-Wechselrichter durch die Kopplung mit dem DC-Zwischenkreis ein Anlaufverhalten der Generatoreinheit vorgibt, insbesondere die Generatoreinheit beim Anlaufen kurzfristig bestromt.

Ferner ist vorzugsweise vorgesehen, dass die Expanderbetriebssteuereinheit eine den Umrichter steuernde Steuereinheit aufweist.

Eine derartige Steuereinheit ist vorzugsweise so ausgebildet, dass sie den Generator-Wechselrichter ansteuert, um die vom Generator erzeugte elektrische Leistung in den DC-Zwischenkreis einzuspeisen oder gegebenenfalls durch die Kopplung mit dem DC-Zwischenkreis ein Anlaufverhalten der Generatoreinheit vorzugeben.

Darüber hinaus ist auch vorteilhafterweise vorgesehen, dass die Steuereinheit den Netz-Wechselrichter ansteuert, um einerseits eine Einspeisung aus dem Netz in den DC-Zwischenkreis vornehmen zu können und andererseits die von dem Generator-Wechselrichter in den DC-Zwischenkreis eingespeiste elektrische Leistung der Generatoreinheit in das Netz einzuspeisen.

Ferner ist vorzugsweise vorgesehen, dass die Steuereinheit den Kompressor-Wechselrichter ansteuert, um durch Steuerung der Leistung des Kompressors den Hochdruck im thermodynamischen Kreisprozess zu steuern.

Eine besonders zweckmäßige Lösung sieht vor, dass die Steuereinheit durch Ansteuerung des Netz-Wechselrichters, des Kompressor-Wechselrichters und des Generator-Wechselrichters den Motor für den Kompressor und die Generatoreinheit im Normalbetriebsmodus entsprechend einem Signal zum Erreichen und Aufrechterhalten des Hochdrucks am Hochdruckanschluss der Expandermaschine die Drehzahl des Motors steuert und die von der Generatoreinheit erzeugte elektrische Leistung dem DC-Zwischenkreis zuführt, wobei der Netzwechselrichter die überschüssige elektrische Leistung aus dem DC-Zwischenkreis dem Versorgungsnetz zuführt.

Darüber hinaus ist vorzugsweise vorgesehen, dass die Steuereinheit in einem Überwachungsmodus den Normalbetriebsmodus insoweit überwacht, ob ein mögliches Abschaltsignal vorliegt. Im Fall eines derartigen Vorliegens wird erfindungsgemäß einen Übergang von dem Normalbetriebsmodus in den Betriebsbeendigungsmodus eingeleitet, in welchem die Generatoreinheit gemäß dem Verfahren nach Anspruch 1 gefahren wird.

Des Weiteren ist zweckmäßiger Weise vorgesehen, dass die Steuereinheit den Betriebsbeendigungsmodus mit einem Drehzahlüberwachungsmodus dahingehend überwacht, ob der Niedrigstdrehzahlbereich des mindestens einen Schraubenläufers erreicht ist.

Darüber hinaus ist vorzugsweise vorgesehen, dass die Steuereinheit bei Erreichen des Niedrigstdrehzahlbereichs des mindestens einen Schraubenläufers in einen Haltemodus übergeht, in welchem die Drehzahl des mindestens einen Schraubenläufers in dem Niedrigstdrehzahlbereich durch Ansteuerung des Generator-Wechselrichters gehalten wird.

Eine weitere zweckmäßige Lösung sieht vor, dass die Steuereinheit nach Beendigen des Haltemodus in einen Wartemodus übergeht, in welchem Voreinstellungen für einen erneuten Start der Generatoreinheit durch den Generator-Wechselrichter vorgenommen werden, wobei der Wartemodus durch einen Warteüberwachungsmodus überwacht wird, der im Fall eines Signals für einen Neustart einen Übergang in einen Anlaufmodus einleitet.

Vorzugsweise ist dabei vorgesehen, dass die Steuereinheit in dem Anlaufmodus den Generator-Wechselrichter derart ansteuert, dass dieser zu einem definierten Anlauf der Generatoreinheit diese kurzzeitig, insbesondere zur Vormagnetisierung, bestromt.

Für das erfindungsgemäße Verfahren, bei welchem mit möglichst umfassenden Maßnahmen Beschädigungen im Bereich des mindestens einen Schraubenläufers vermieden werden sollen, ist es ebenfalls von Vorteil, wenn bei dem mindestens einen Schraubenläufer ein Schmiermittelstützfilm zwischen den hochdruckseitigen Endflächen des Schraubenläufers und der Endwandfläche des Maschinengehäuses mittels einer Schmiermittelzufuhreinheit aufgebaut wird.

Hierbei ist es besonders vorteilhaft, wenn der Schmiermittelstützfilm durch Zufuhr von Schmiermittel zu einem Abstützbereich aufrecht erhalten wird, der sich zwischen der hochdruckseitigen Endfläche des Schraubenläufers und der Endwandfläche und zwischen dem innersten Durchmesser der hochdruckseitigen Endfläche und einer radial außen liegenden kreisförmigen Grenzlinie erstreckt.

Hinsichtlich der Lage der kreisförmigen Grenzlinie wurden dabei keine definierten Angaben gemacht.

So sieht eine vorteilhafte Lösung vor, dass die kreisförmige Grenzlinie insbesondere in einem radialen Abstand von der Schraubenläuferachse verläuft, der maximal dem radialen Abstand einer innenliegendsten Wurzel einer jeweiligen Schraubenläuferkontur von der jeweiligen Schraubenläuferachse entspricht.

Darüber hinaus betrifft die Erfindung auch eine Verdichter-/Expandermaschine zum Betrieb in einem Kreislauf für ein Arbeitsmedium bzw. eine Verdichtermaschine oder eine Expandermaschine gemäß den voranstehend beschriebenen Merkmalen.

Weitere Merkmale der Erfindung sind Gegenstand der nachfolgenden Beschreibung sowie der zeichnerischen Darstellung einiger Ausführungsbeispiele.

In den Zeichnungen zeigen:
- Fig. 1: einen Längsschnitt durch ein Ausführungsbeispiel einer erfindungsgemäßen Verdichter-/Expandermaschine;
- Fig. 2: einen Längsschnitt gemäß Linie 2-2 in Fig. 1;

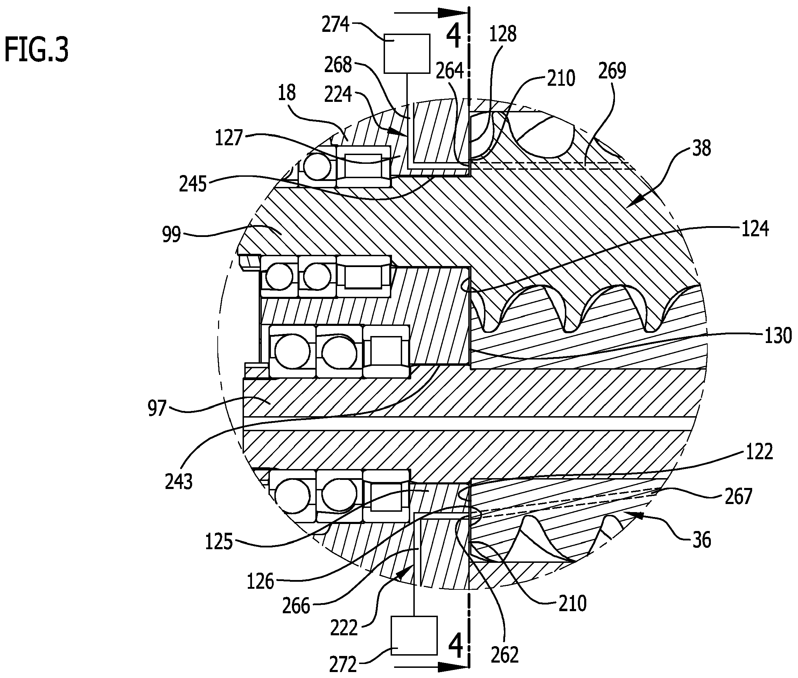

- Fig. 3: eine vergrößerte Darstellung des mit einem Kreis in Fig. 2 gekennzeichneten Bereich;

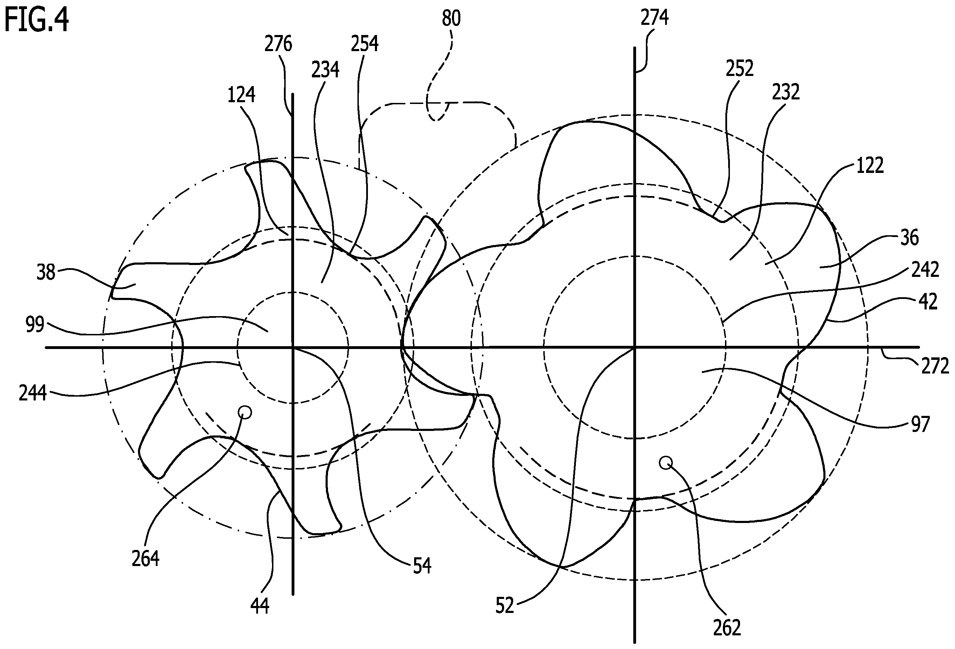

- Fig. 4: einen Schnitt längs Linie 4-4 in Fig. 3;
- Fig 5: eine Darstellung des Einsatzes einer erfindungsgemäßen Verdichter-/Expandermaschine als Verdichtermaschine in einem Kältemittelkreislauf;
- Fig. 6: eine schematische Darstellung der in Fig. 5 dargestellten Betriebssteuereinheit mit dem zugehörigen Umrichter;
- Fig. 7: ein Ablaufdiagram der Betriebsmoden einer Steuereinheit der Betriebssteuereinheit gemäß Fig. 5;
- Fig. 8: eine Darstellung einer Ausführungsform einer Beendigung des Betriebs der Verdichtermaschine gemäß Fig. 5 bis 7;
- Fig. 9: eine Darstellung einer erfindungsgemäßen Verdichter-/Expandermaschine als Expandermaschine in einem thermodynamischen Kreisprozess;
- Fig. 10: eine Darstellung der Betriebssteuereinheit gemäß Fig. 9 mit einer Steuereinheit und dem von dieser gesteuerten Umrichter;
- Fig. 11: ein Ablaufschema der Betriebsmoden der Steuereinheit gemäß Fig. 10 und
- Fig. 12: eine schematische Darstellung der Beendigung des Betriebs der Expandermaschine.

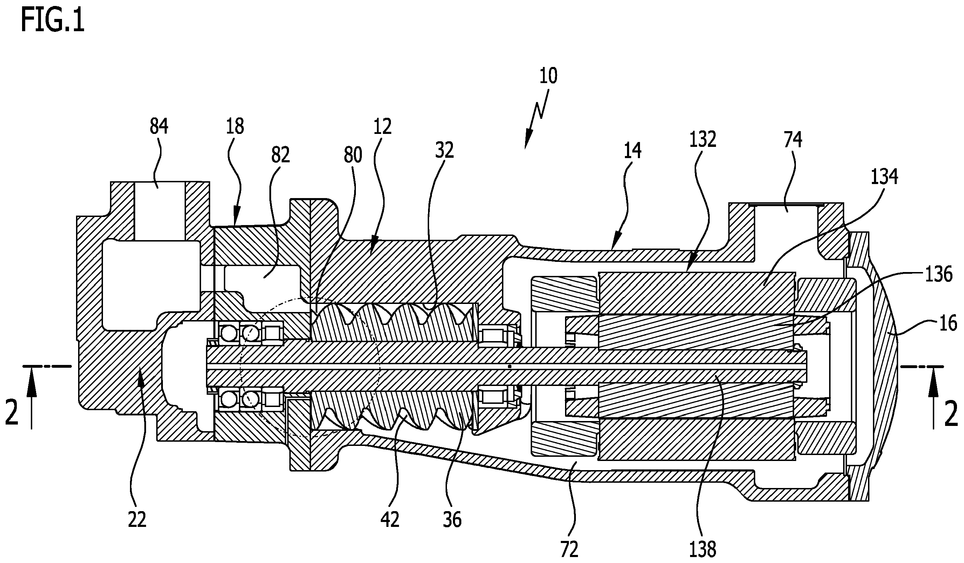

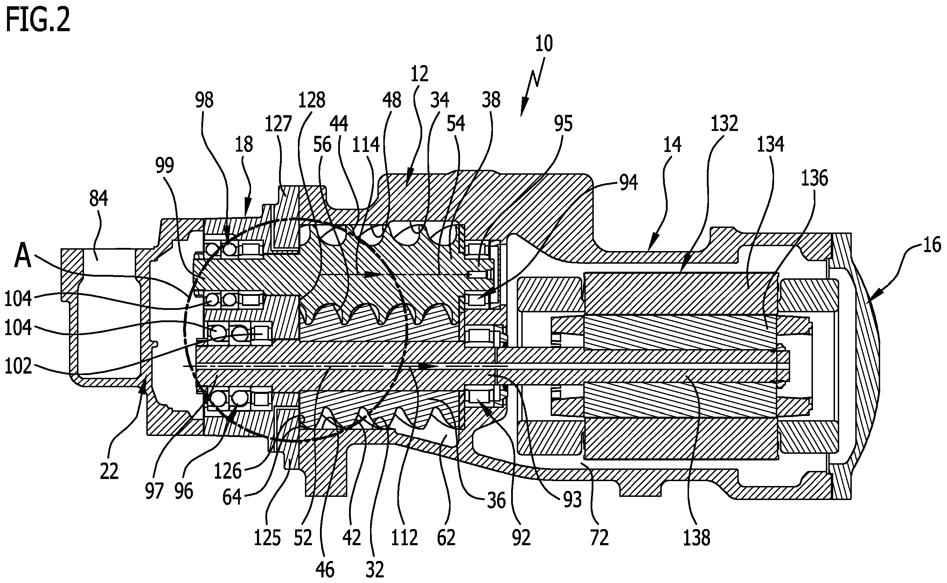

Ein erstes Ausführungsbeispiel einer erfindungsgemäßen Maschine, insbesondere einer Verdichter-/Expandermaschine 10, dargestellt in Fig. 1 und 2, mit einem Maschinengehäuse 11, welches durch ein Schraubenläufergehäuse 12 und ein sich an eine Seite des Schraubenläufergehäuses 12 anschließendes Motor-/Generatorgehäuse 14 gebildet ist, das durch einen endseitigen Gehäusedeckel 16 an einer dem Schraubenläufergehäuse 12 gegenüberliegenden Seite abgeschlossen ist.

Auf einer dem Motor-/Generatorgehäuse 14 gegenüberliegenden Seite des Schraubenläufergehäuses 12 schließt sich ein Lagergehäuse 18 an, welches durch einen Lagergehäusedeckel 22 auf einer dem Schraubenläufergehäuse 12 gegenüberliegenden Seite abgeschlossen ist.

In dem Schraubenläufergehäuse 12 sind beispielsweise zwei Schraubenläuferbohrungen 32, 34 vorgesehen, in welchem zwei Schraubenläufer 36 und 38 angeordnet sind, die mit ihren Schraubenläuferkonturen 42, 44 ineinander greifen und mit Wandflächen 46, 48 der Schraubenläuferbohrungen 32, 34 zusammenwirken, um bei einer Drehung um ihre jeweiligen Schraubenläuferachsen 52, 54 Kammern 56 zu bilden, welche zwischen den Schraubenläuferkonturen 42, 44 und den Wandflächen 46, 48 eingeschlossen sind, wobei diese Kammern 56 das maximal mögliche Volumen an einer sich an einer an die Schraubenläuferbohrungen 32, 34 anschließenden Niederdruckseite 62, bei welcher der vorliegende Druck durch einen Niederdrucksensor 63 erfasst wird, aufweisen und das geringste Volumen an einem sich an eine Hochdruckseite 64, bei welcher der vorliegende Druck durch einen Hochdrucksensor 65 erfasst wird, anschließenden Bereich aufweisen.

In dem beispielsweise dargestellten Ausführungsbeispiel liegt die Niederdruckseite 62 auf einer Seite des Schraubenläufergehäuses 12, die dem Motor-/Generatorgehäuse 14 zugeordnet ist, wobei die Niederdruckseite 62 durch einen das Motor-/Generatorgehäuse 14 durchsetzenden Niederdruckkanal 72 verbunden ist, der seinerseits bis zu einem Niederdruckanschluss 74 des Maschinengehäuses 12 verläuft, wobei der Niederdruckanschluss 74 vorzugsweise nahe des Gehäusedeckels 16 angeschlossen ist, so dass der Niederdruckkanal 72 zwischen dem Niederdruckanschluss 74 und der Niederdruckseite 62 so weit wie möglich durch das Motor-/Generatorgehäuse 14 und insbesondere über dessen gesamte Länge verläuft.

In dem beispielsweise dargestellten Ausführungsbeispiel liegt die Hochdruckseite 64 auf einer Seite des Schraubenläufergehäuses 12, die dem Lagergehäuse 18 zugewandt ist, wobei die Hochdruckseite 64 an eine Hochdrucköffnung 80 der Schraubenläuferbohrungen 32, 34 angrenzt, auf welche ein Hochdruckkanal 82 folgt, der durch das Lagergehäuse 18 verläuft und in den Lagergehäusedeckel 22 eintritt und zu einem Hochdruckanschluss 84 in dem Maschinengehäuse 12 führt, der beispielsweise in dem Lagergehäusedeckel 22 angeordnet ist.

Wie in Fig. 1 und 2 dargestellt, sind die Schraubenläufer 36 und 38 drehbar um die jeweilige Schraubenläuferachse 52, 54 in dem Gesamtgehäuse 10 gelagert, wobei für jeden der Schraubenläufer 36, 38 ein jeweiliger Lagersatz 92, 94 auf der Niederdruckseite 62 und für jeden der Schraubenläufer 36, 38 ein Lagersatz 96, 98 auf der Hochdruckseite angeordnet ist.

Jeder der Lagersätze 92, 94, 96, 98 umfasst mindestens jeweils ein Radiallager 102 und zusätzlich umfasst jeder der Lagersätze 92, 94, 96, 98 für jeden der Schraubenläufer 36, 38, beispielsweise der jeweilige Lagersatz 96, 98 auf der Hochdruckseite 64 mindestens ein axial wirkendes Lager 104.

Insbesondere ist jeder der Lagersätze 92, 94, 96, 98 auf einem Lageraufnahmebereich 93, 95, 97, 99 des jeweiligen Schraubenläufers 36, 38 angeordnet.

Die axial wirkenden Lager 104 stützen die Schraubenläufer 36, 38 so ab, dass sie auf die Schraubenläufer 36, 38 einer in Richtung der Niederdruckseite 62 wirkenden Kraft auf die Schraubenläufer 36, 38 entgegenwirken, da die Druckdifferenz zwischen der Hochdruckseite 64 und der Niederdruckseite 62 auf die Schraubenläufer derart einwirkt, dass diese die Tendenz haben, sich in die Richtungen 112, 114 parallel zu den Schraubenläuferachsen 52, 54 und weg von der Hochdruckseite 64 in Richtung zur Niederdruckseite 62 zu bewegen und somit einen hochdruckseitigen Dichtspalt 130, der in der Betriebsstellung der Schraubenläufer 36, 38 auf der Hochdruckseite 64 zwischen hochdruckseitigen Endflächen 122, 124 der Schraubenläufer 36, 38 und den Endwandflächen 126, 128, gebildet durch Endwände 125, 127 des Lagergehäuses 18, die die Schraubenläuferbohrungen 32, 34 auf der Hochdruckseite 64 verschließen, vorliegt, zu vergrößern und somit in der durch die axial wirkenden Lager 104 vorgegebenen Größe zu halten.

Die Aufrechterhaltung der Betriebsstellung und somit des Dichtspalts 130 zwischen der jeweiligen hochdruckseitigen Endfläche 122, 124 des jeweiligen Schraubenläufers 36, 38 und der jeweiligen Endwandfläche 126, 128, der eine vorbestimmte Spaltbreite aufweist und in üblichen Verdichter- oder Expandermaschinen durch einen Schmiermittelfilm verschlossen ist, ist erforderlich, um einen optimalen und insbesondere im Bereich der hochdruckseitigen Endflächen 122, 124 und der Endwandflächen 126, 128 verschleißfreien Betrieb der Verdichter-/Expandermaschine sicherzustellen und daher ist die Betriebsstellung durch die Wirkung der axial wirkenden Lager 104 auf die Schraubenläufer 36, 38 vorbestimmt.

Die Schraubenläufer 36, 38, die um ihre Schraubenläuferachsen 52, 54 rotieren, sind mit einer elektrischen Motor-/ Generatoreinheit gekoppelt, die als Ganzes mit 132 bezeichnet ist und in dem Motor-/Generatorgehäuse 14 angeordnet ist.

Die elektrische Motor-/Generatoreinheit 132 umfasst einen Stator 134, der fest in dem Motor-/Generatorgehäuse 14 angeordnet ist und einen Rotor 136, der von dem Stator 134 umgeben ist und auf einer gemeinsamen Antriebswelle 138 angeordnet ist, die sowohl den Rotor 136 als auch den Schraubenläufer 36 durchsetzt und in den Lagersätzen 92 und 96 gelagert ist.

Somit entspricht bei diesem Ausführungsbeispiel die Drehzahl der Schraubenläufer 36, 38 der Drehzahl der Motor-/Generatoreinheit 132.

Wie in Fig. 1 und 2 dargestellt, ist die Motor-/Generatoreinheit 132 so angeordnet, dass der Niederdruckkanal 72 mindestens durch gewisse Bereiche und entlang des Stators 134 und ebenfalls - wenn erforderlich - zwischen dem Rotor 136 und dem Stator 134 verläuft, um die elektrische Motor-/Generatoreinheit 132 durch das auf der Niederdruckseite strömende Gas zu kühlen.

Der mit der elektrischen Motor-/Generatoreinheit 132 gekoppelte Schraubenläufer 36 ist selbst durch die miteinander zusammenwirkenden Schraubenläuferkonturen 42, 44 mit dem Schraubenläufer 38 gekoppelt, mit dem Ergebnis, dass die zwischen diesen gebildeten Kammern 56 je nach Drehrichtung der Schraubenläufer 36, 38, entweder von der Niederdruckseite 62 zur Hochdruckseite 64 wandern und das niederdruckseitig zugeführte Gas komprimieren und an der Hochdruckseite 64 abgeben oder von der Hochdruckseite 64 zur Niederdruckseite 62 wandern um somit das auf der Hochdruckseite 64 zugeführte Gas als expandiertes Gas auf der Niederdruckseite 62 abzugeben.

Während Start oder Stoppvorgängen oder im Fall eines abgebrochenen Starts oder Stoppvorgangs oder einer falschen Drehrichtung der Motor-/Generatoreinheit 132 ist es möglich, dass Zustände auftreten, bei welchen die Kräfte, die auf die Schraubenläufer 36, 38 in den Richtungen 112, und 114 wirken, nahe Null oder gegebenenfalls negativ werden.

In diesen Fällen ist es möglich, dass der Dichtspalt 130 sich verringert und dadurch die hochdruckseitigen Endflächen 122, 124 der Schraubenläufer 36, 38 in Berührung mit den Endwandflächen 126, 128 kommen, wodurch eine Abrasion oder eine Erhitzung, in bestimmten Fällen eine Überhitzung und folglich eine Beschädigung der hochdruckseitigen Endflächen 122, 124 und/oder der Endwandflächen 126, 128 oder der Schraubenläuferkonturen 42, 44 der Schraubenläufer erfolgt, da die axial wirkenden Lager 104 nur in den Richtungen 112, und 114 wirksam sind, und nicht in den den Richtungen 112, 114 entgegengesetzten Richtungen.

Um eine Verringerung des Dichtspalts 130 und insbesondere einen Kontakt der hochdruckseitigen Endflächen 122, 124 der Schraubenläufer 36, 38 mit den Endwandflächen 126, 128 zu vermeiden, wird beispielsweise ein Schmiermittelstützfilm 210 zwischen den Endflächen 122, 124 der Schraubenläufer 36, 38 und den Endwandflächen 126 und 128 des Maschinengehäuses 10 aufgebaut, wobei der Schmiermittelstützfilm 210 durch Schmiermittelzufuhreinheiten 222, 224 erzeugt wird, die Schmiermittel zu dem Schmiermittelstützfilm 210 zuführen, um durch diese permanente Schmiermittelzufuhr zumindest in den Betriebsphasen der Maschine, in denen das Risiko einer Verringerung des Dichtspalts besteht, diese zu vermeiden.

Beispielsweise wird bei einem ersten Ausführungsbeispiel dieses Konzepts der Schmiermittelstützfilm 210 primär zwischen mindestens einem der Abstützbereiche 232 und 234 der Schraubenläufer 36, 38 hergestellt, die in einem radialen Abstand von der jeweiligen Schraubenläuferachse 52, 54 verlaufen, der sich von dem innersten Durchmesser 242, 244 der jeweiligen hochdruckseitigen Endfläche 122, 124 des jeweiligen Schraubenläufers 36, 38 bis zu einer radial außen liegenden kreisförmigen Grenzlinie 246, 248 erstreckt.

Beispielsweise ist es ausreichend, einen derartigen Schmiermittelstützfilm 210 für den männlichen Schraubenläufer 36 vorzusehen, der mit der Motor-/Generatoreinheit 312 verbunden ist.

Jedoch ist es noch vorteilhafter, einen derartigen Schmiermittelstützfilm 210 für beide Schraubenläufer 36, 38 vorzusehen.

Der innenliegende Durchmesser 242, 244 wird vorzugsweise definiert durch einen äußeren Durchmesser des jeweiligen Lageraufnahmebereichs 97, 99, der sich über die jeweilige hochdruckseitige Endfläche 122, 124 durch die Bohrungen 243, 245 in den Endwänden 125 und 127 und dann in den jeweiligen Lagersatz 96, 98 des jeweiligen Schraubenläufers 36, 38 erstreckt, dessen Lagersatz 96, 98 in dem Lagergehäuse 18 angeordnet ist.

Die kreisförmige Grenzlinie 246, 248 liegt radial außerhalb des innersten Durchmessers 242, 244 auf der hochdruckseitigen Endfläche 122, 124 und erstreckt sich vorzugsweise in einem radialen Abstand von der jeweiligen Schraubenläuferachse 52, 54, der maximal dem radialen Abstand der innenliegendsten Wurzel 252, 254 der jeweiligen Schraubenkontur 42, 44 von den jeweiligen Schraubenläuferachsen 52, 54 entspricht.

Somit ist die Stützfläche 232, 234 ein in Umfangsrichtung geschlossener ringscheibenförmiger Bereich um die jeweilige Schraubenläuferachse 52, 54, so dass der Schmiermittelstützfilm 210 durch die rotierenden Schraubenläufer nicht durch Teile der Schraubenkonturen 42, 44 in Umfangsrichtung unterbrochen wird.

Um das Schmiermittel dem Schmiermittelstützfilm 210 zuzuführen, führen die Zufuhreinheiten 222, 224 das Schmiermittel zu mindestens einer Schmiermittelzufuhröffnung 262, 264, von welcher das Schmiermittel in die jeweiligen Stützbereiche 232, 234 fließen kann.

Beispielsweise können erste Schmiermittelzufuhröffnungen 262, 264 so angeordnet sein, dass sie direkt der jeweiligen Stützfläche 232, 234 zugewandt sind, dadurch, dass die jeweiligen Zufuhröffnungen 262, 264 in dem Lagergehäuse 18 angeordnet sind, so dass die jeweiligen Schmiermittelzufuhröffnungen 262, 264 in der jeweiligen Endwandfläche 126, 128 liegen.

In diesem Fall ist die jeweilige Schmiermittelzufuhreinheit 222, 224 mit einem Kanal 266, 268 versehen, der sich durch das Lagergehäuse 18 zu den jeweiligen Schmiermittelzufuhröffnungen 262, 264 erstreckt.

Der Kanal 266, 268 ist dann beispielsweise mit einem Schmiermittelreservoir 272, 274 der jeweiligen Schmiermittelzufuhreinheit 222, 224 verbunden.

Alternativ dazu können aber auch die Schmiermittelzufuhröffnungen 262, 264 innerhalb der Hochdruckendflächen 122, 124 des jeweiligen Schraubenläufers 36, 38 angeordnet sein und in diesem Fall verlaufen die jeweiligen Kanäle 267, 269 durch die jeweiligen Schraubenläufer 36, 38.

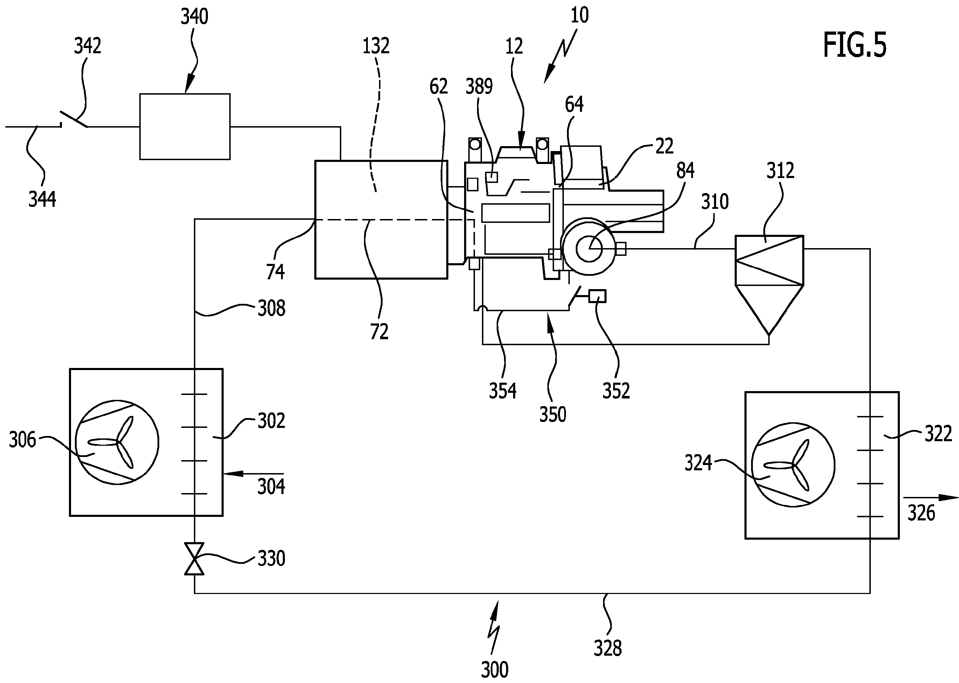

Eine erste Einsatzmöglichkeit der erfindungsgemäßen Verdichter-/ Expandermaschine 10, dargestellt in Fig. 5, sieht vor, dass die Maschine als Verdichtermaschine 10a in einem als Ganzes mit 300 bezeichneten Kältemittelkreislauf, beispielsweise einer Kühlanlage oder einer Wärmepumpe, eingesetzt ist, in welchem ein expandiertes Kältemittel in einem Wärmetauscher 302 Wärme aus einem Wärmestrom 304 aufnimmt, der beispielsweise mittels eines Gebläses 306 durch den Wärmetauscher 302 geführt wird.

Das Kältemittel strömt über eine Kältemittelzuleitung 308 dann bis zu dem Niederdruckanschluss 74 der Verdichtermaschine 10, welcher beispielsweise an dem Gehäusedeckel 16 angeordnet ist, so dass das Kältemittel über den Niederdruckkanal 72 bis zur Niederdruckseite 62 des Schraubenläufergehäuses 12 strömt, von den durch die Motoreinheit 132a angetriebenen Schraubenläufern 36, 38 im Zusammenwirken mit den Wandflächen 46, 48 verdichtet wird und an der Hochdruckseite 64 über die Hochdrucköffnung 80 austritt und dann zu dem Hochdruckanschluss 84 strömt.

Das verdichtete Kältemittel verlässt dann über eine Hochdruckleitung 310 die Verdichtermaschine 10a, durchströmt beispielsweise noch einen Schmiermittelabscheider 312 und tritt dann in den Wärmetauscher 322 ein, in welchem das Kältemittel, beispielsweise durch ein Gebläse 324 unterstützt, einen Wärmestrom 326 abgibt, so dass das damit dann abgekühlte Kältemittel über eine Zufuhrleitung 328 einer Expansionseinheit 330 zugeführt wird, in welcher das Kältemittel expandiert und nachfolgend dem Wärmetauscher 302 erneut zur Aufnahme von Wärme aus dem Wärmestrom 304 zugeführt wird.

Die Motoreinheit 132a wird dabei mit einer Verdichterbetriebssteuereinheit 340 betrieben, welche beispielsweise über einen Schalter 342 mit einem üblichen beispielsweise dreiphasigen AC-Versorgungsnetz 344 verbunden ist.

Ferner ist beispielsweise der Kältemittelkreislauf 300 noch so ausgebildet, dass er eine Druckentlastung 350 aufweist, die eine die Niederdruckseite 62 mit der Hochdruckseite 64 verbindende und dabei über ein Schaltventil 352 zu- und abschaltbare Druckentlastungsleitung 354 aufweist, wobei die Druckentlastungsleitung 354 die Niederdruckseite 62 mit der Hochdruckseite 64 oder aber auch den Niederdruckanschluss 74 mit dem Hochdruckanschluss 84 verbinden kann.

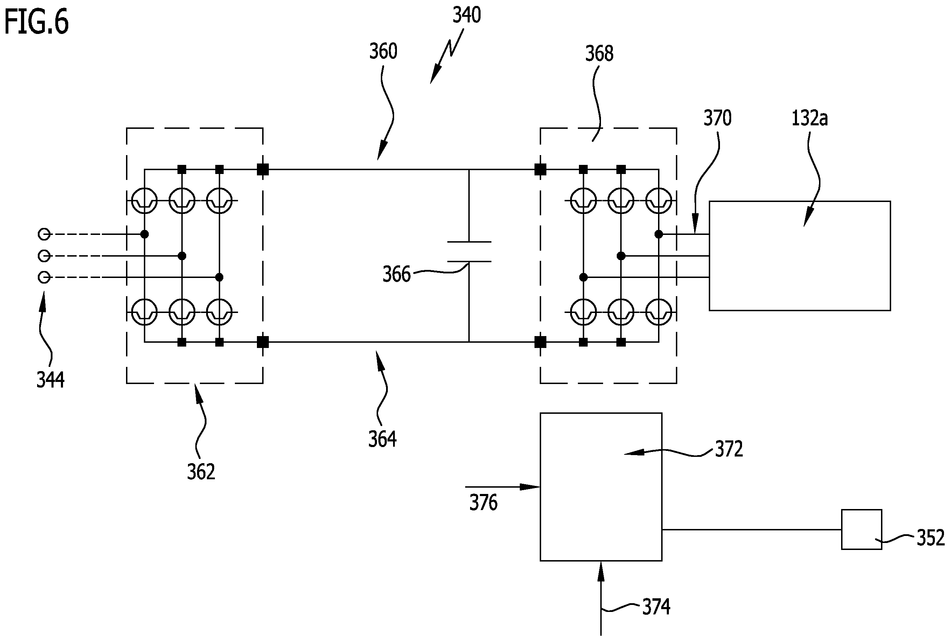

Die Verdichterbetriebssteuereinheit 340 umfasst, wie in Fig. 6 dargestellt, einen Umrichter 360, welcher einen Gleichrichter 362 aufweist, der aus den drei Phasen des AC-Versorgungsnetzes 344 eine Gleichspannung erzeugt und diese einem DC-Zwischenkreis 364 zuführt, in welchem eine Leistungsspeicherung durch eine Kapazität 366 erfolgt.

Die Gleichspannung des DC-Zwischenkreises 364 wird dann durch einen ansteuerbaren Wechselrichter 368 in eine frequenzvariable Versorgungsspannung an einem Ausgang 370 des Wechselrichters 368 gewandelt, so dass die Motoreinheit 132 der Verdichtermaschine 10a frequenzvariabel betrieben werden kann.

Beispielsweise umfasst die Motoreinheit 132a einen durch drei Phasen des Ausgangs 370 gespeisten Asynchronmotor, es ist aber auch möglich, anstelle des Asynchronmotors einen Permanentmagnetmotor einzusetzen.

Der Wechselrichter 368 ist dabei durch eine von der Verdichterbetriebssteuereinheit 340 umfasste und gegebenenfalls auch in den Wechselrichter 368 integrierte Steuereinheit 372 steuerbar, welche durch die Vorgabe der Frequenz der Versorgungsspannung am Ausgang 370 in der Lage ist, die Drehzahl der Motoreinheit 132 vorzugeben.

Ferner ist die Steuereinheit 372 beispielsweise auch in der Lage, das Schaltventil 352 der Druckentlastung 350 anzusteuern, welches es ermöglicht, durch Zuschalten der Druckentlastungsleitung 354 einen Druckausgleich zwischen der Hochdruckseite 64 und der Niederdruckseite 62 herzustellen.

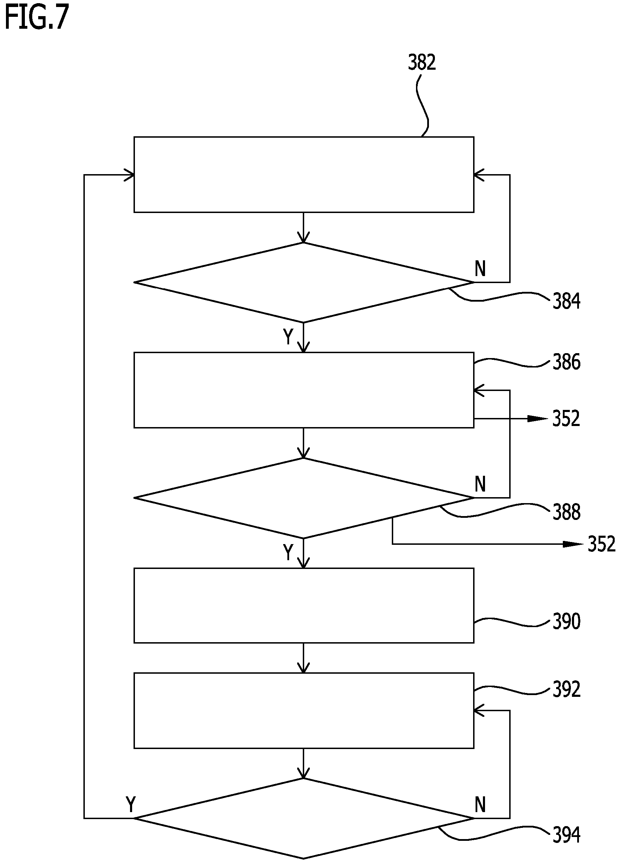

Dabei arbeitet die Steuereinheit 372 gemäß folgenden in Fig. 7 dargestellten Betriebsmoden.

In einem Normalbetriebsmodus 382 wird die Motoreinheit 132a mit der durch ein Signal 374, erzeugt von einer übergeordneten Steuerung des Betriebs des Kältemittelkreislaufs 300, vorgegebenen Drehzahl betrieben.

Der Normalbetriebsmodus 382 wird ständig überwacht durch einen Überwachungsmodus 384, welcher prüft, ob der Normalbetrieb aufrecht erhalten werden soll oder beendet werden soll.

In dem Normalbetriebsmodus 382 ist die Aufrechterhaltung des hochdruckseitigen Dichtspalts 130 gewährleistet, wie vorstehend beschrieben. Probleme mit Abrasion oder Erhitzung oder Überhitzung der Endflächen 122, 124 und der Endwandflächen 126, 128 treten insbesondere beim Abschalten der Motoreinheit 132 auf.

Stellt die Steuereinheit 372 aufgrund eines dieser übermittelten Abschaltsignals 376 im Überwachungsmodus 384 fest, dass der Normalbetrieb beendet werden soll, wird, insbesondere um die voranstehend beschriebenen Probleme durch Verringerung des Dichtspalts 130 zu vermeiden, ein Betriebsbeendigungsmodus, insbesondere ein Abbremsmodus, 386, aktiviert, in welchem der Wechselrichter 368 so betrieben wird, dass er die Motoreinheit 132a abbremst und somit deren Drehzahl reduziert.

Das Abschaltsignal 376 kann durch ein von der übergeordneten Steuerung des Betriebs des Kältemittelkreislaufs 300 generiertes reguläres Abschaltsignal sein.

Das Abschaltsignal 376 kann aber auch ein durch eine auftretende Betriebsstörung im Kältemittelkreislauf 300 erzeugtes Abschaltsignal sein.

Die Steuereinheit 372 erhält insbesondere das Abschaltsignal 376 in folgenden Fällen:
im Fall eines internen Abschaltens;
im Fall eines externen Abschaltens;
und im Fall eines Notaus
oder im Fall einer Störung im Bereich der Wärmetauscher 302 und/oder 322
oder im Fall einer Störung in der Expansionseinheit 330.

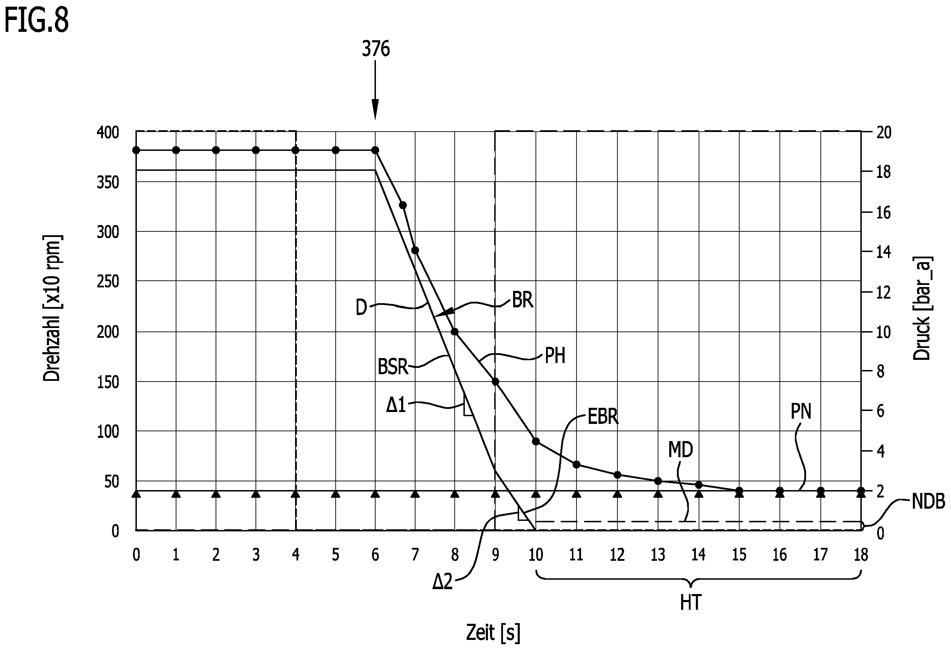

Im Abschaltmodus, insbesondere im Abbremsmodus 386, erfolgt die Reduzierung der Drehzahl D der Schraubenläufer 36, 38 durch die Motoreinheit 132a durch geeignetes Bestromen der Wicklungen derselben mittels des Wechselrichters 368 mit sich reduzierender Frequenz, vorzugsweise gemäß einer vorgegebenen Abbremsrampe BR, welche einen Verlauf der Abnahme der Drehzahl der Motoreinheit 132a und somit auch der Drehzahl D der Schraubenläufer 36, 38, vorgibt, wie in Fig. 8 dargestellt.

Vorzugsweise umfasst die Abbremsrampe BR mindestens eine erste Bremsstartrampe BSR, welche mit einer vorgebbaren ersten Drehzahlreduktion DR1 entsprechend einem ersten Drehzahlgradient Δ1 pro Zeiteinheit die Drehzahl der Motoreinheit 132a durch Reduzierung der Frequenz des Wechselrichters 368 reduziert, und eine Endbremsrampe EBR, die beispielsweise eine geringere zweite Drehzahlreduktion DR2 entsprechend einem zweiten Drehzahlgradient Δ2 pro Zeiteinheit zum Gegenstand hat als die Bremsstartrampe BSR, wobei insbesondere die Endbremsrampe EBR ausgehend von einem Endwert der Bremsstartrampe BSR die Drehzahl auf einen Niedrigstdrehzahlbereich NDB unterhalb einer vorgegebenen maximalen Drehzahl MD reduziert, die eine Obergrenze eines Drehzahlbereichs für seinen Niedrigstdrehzahlbetrieb NDB der Schraubenläufer 36, 38, darstellt.

Der Abbremsmodus 386 wird dabei durch einen Drehzahlüberwachungsmodus 388 überwacht, welcher mittels eines Sensors 389 feststellt, ob die dem Drehzahüberwachungsmodus 388 für die Abbremsrampe BR vorgegebene Drehzahl der Schraubenläufer 36, 38 und bei einem Direktantrieb derselben, wie im dargestellten Ausführungsbeispiel, auch der Motoreinheit 132a erreicht, eingehalten oder unterschritten wird, bis der Niedrigstdrehzahlbereich NDB erreicht ist.

Die maximale Drehzahl MD des Niedrigstdrehzahlbereichs NDB kann kleiner als 10 Hz, beispielsweise weniger als 5 Hz oder weniger als 3 Hz betragen, vorzugsweise werden 0 Hz erreicht und auch gehalten.

Bei Erreichen der maximalen Drehzahl MD geht die Steuereinheit 372 in einen Haltemodus 390 über, in welchem die vorgegebene maximale Drehzahl MD oder eine geringere Drehzahl gehalten wird, wobei der Haltemodus 390 für eine definierte Zeitspanne, beispielsweise mehrere Sekunden, vorzugsweise mehr als 5 Sekunden, besser mehr als 10 Sekunden und noch besser mehr als 15 Sekunden, jedoch zweckmäßigerweise weniger als 1 Minute durch geeignetes Bestromen der Wicklungen der Motoreinheit 132a mittels des Wechselrichters 368 aufrecht erhalten wird, um sicherzustellen, dass beide Schraubenläufer 36, 38 die maximale Drehzahl MD beibehalten oder noch besser unterschreiten, und somit nicht durch die in der Verdichtermaschine 10 vorherrschenden Druckverhältnisse veranlasst werden können, die Drehzahl wieder zu erhöhen.

Insbesondere wird der Haltemodus 390 so lange aufrechterhalten, dass davon ausgegangen werden kann, dass in der Verdichtermaschine 10 keine auf die Schraubenläufer 36, 38 einwirkenden Druckdifferenzen mehr vorliegen.

Alternativ dazu lässt sich auch die Aufrechterhaltung des Haltemodus durch Erfassung der Druckdifferenz zwischen dem Niederdrucksensor 63 und dem Hochdrucksensor 65 ermitteln, die zur Beendigung des Haltemodus einen definierten Wert unterschreiten muss.

Nach Beendigung dieses Haltemodus 390 geht die Steuereinheit 372 in einen Wartemodus 392 über, in welchem die Voreinstellungen für einen erneuten Start der Antriebseinheit 132 durch den Wechselrichter 368 wieder aufgenommen werden.

Dieser Wartemodus 392 wird überwacht durch einen Warteüberwachungsmodus 394, der im Fall eines Signals für einen Neustart wiederum einen Übergang in den Betriebsmodus 382 einleitet.

Darüber hinaus wird gegebenenfalls in dem Betriebsbeendigungsmodus, insbesondere in dem Abbremsmodus 386, oder auch erst in dem Haltemodus 390 das Signal zum Schließen des Schaltventils 352 zur Herstellung eines Durchflusses durch die Druckentlastungsleitung 354 erzeugt, um die Druckentlastung 350 der Verdichtermaschine 10 zu aktivieren und somit sicherzustellen, dass die Schraubenläufer 36, 38 durch eine mögliche Druckdifferenz zwischen der Niederdruckseite 62 und der Hochdruckseite 64 nicht wieder ihre Drehzahl steigern können, um Beschädigungen durch Reibung der bei der Drehung der Schraubenläufer einsetzenden Kräfte auf die Schraubenläufer 36, 38, insbesondere entgegengesetzt zu den Richtungen 112 und 114, zu verhindern, die insbesondere bei einer Drehung der Schraubenläufer 36, 38 eine Abrasion oder mindestens eine Erhitzung im Bereich der Endflächen 122, 124 der Schraubenläufer 36, 38 und der Endwandflächen 126, 128, die zu dauerhaften Schäden führen können, bewirken.

Je nach Einsatz der Verdichtermaschine 10 kann das gezielte Abbremsen und das Halten des abgebremsten Zustands noch ergänzt werden, durch generieren des vorstehend beschriebenen Schmiermittelstützfilms 210.

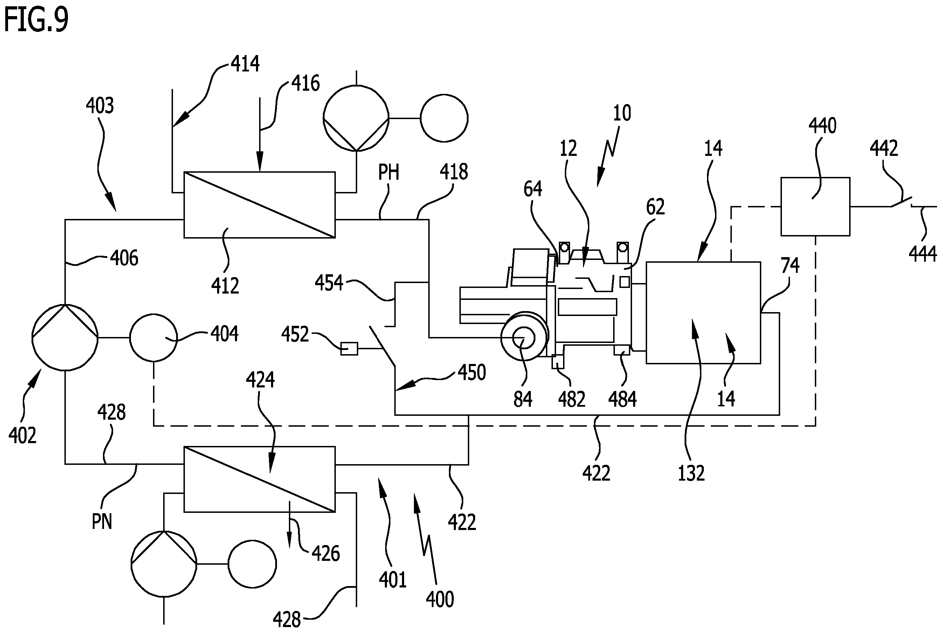

Bei einem zweiten Anwendungsfall der erfindungsgemäßen Maschine ist diese als Expandermaschine 10b in einem Kreislauf 400 für ein Arbeitsmedium insbesondere in einem thermodynamischen Kreisprozess, vorzugsweise in einem Rankinekreislauf 400, angeordnet, in welchem das Arbeitsmedium, beispielsweise ein organisches Medium, mittels eines Kompressors 402, meist als Speisepumpe bezeichnet, angetrieben durch einen Motor 404, ausgehend von einer Niederdruckseite 401 des Kreislaufs 400, verdichtet wird, und auf einer Hochdruckseite 403 über eine Zufuhrleitung 406, einem Wärmetauscher 412 zugeführt wird, in welchem das Arbeitsmedium beispielsweise aus einem Wärmekreislauf 414 einen Wärmestrom 416 aufnimmt und dadurch zusätzlich erhitzt wird, so dass dessen Druck weiter ansteigt, wie in Fig. 9 dargestellt.

Das auf der Hochdruckseite 403 unter Hochdruck PH stehende Arbeitsmedium wird dann mittels einer Leitung 418 dem Hochdruckanschluss 84 der vorstehend beschriebenen Expandermaschine 10b zugeführt und treibt die Schraubenläufer 36 und 38 bei dem Übergang von der Hochdruckseite 64 zur Niederdruckseite 62 an, wobei das expandierte Arbeitsmedium dann das Motorgehäuse 14 durchströmt und an dem Niederdruckanschluss 74 austritt.

Nachfolgend wird das Arbeitsmedium dann auf der Niederdruckseite 401 über eine Leitung 422 einem Wärmetauscher 424 zugeführt und gibt in diesem einen Wärmestrom 426 an einen Kühlkreislauf 428 ab, in welchem der Wärmetauscher 424 ebenfalls angeordnet ist.

Das auf der Niederdruckseite 401 abgekühlte und auf Niederdruck entspannte Arbeitsmedium wird dann über eine Leitung 430 wiederum dem Kompressor 402 zugeführt.

Darüber hinaus ist die Expandermaschine 10b noch mit einer Druckentlastung 450 versehen, welche beispielsweise den Niederdruckanschluss 74 mit dem Hochdruckanschluss 84 verbindet und ein Schaltventil 452 sowie eine Druckentlastungsleitung 454 aufweist, die beispielsweise die Leitung 418 mit der Leitung 422 verbindet.

In diesem Fall ist das Gehäuse 14 ein Generatorgehäuse.

Die in diesem Generatorgehäuse 14 angeordnete Generatoreinheit 132b wirkt mit einer Expanderbetriebssteuereinheit 440 zusammen, welche beispielsweise über einen Schalter 442 0beispielsweise mit einem üblichen dreiphasigen AC-Versorgungsnetz 444 verbunden ist und bei arbeitendem Kreislauf 400 Energie in das Versorgungsnetz 444 einspeist.

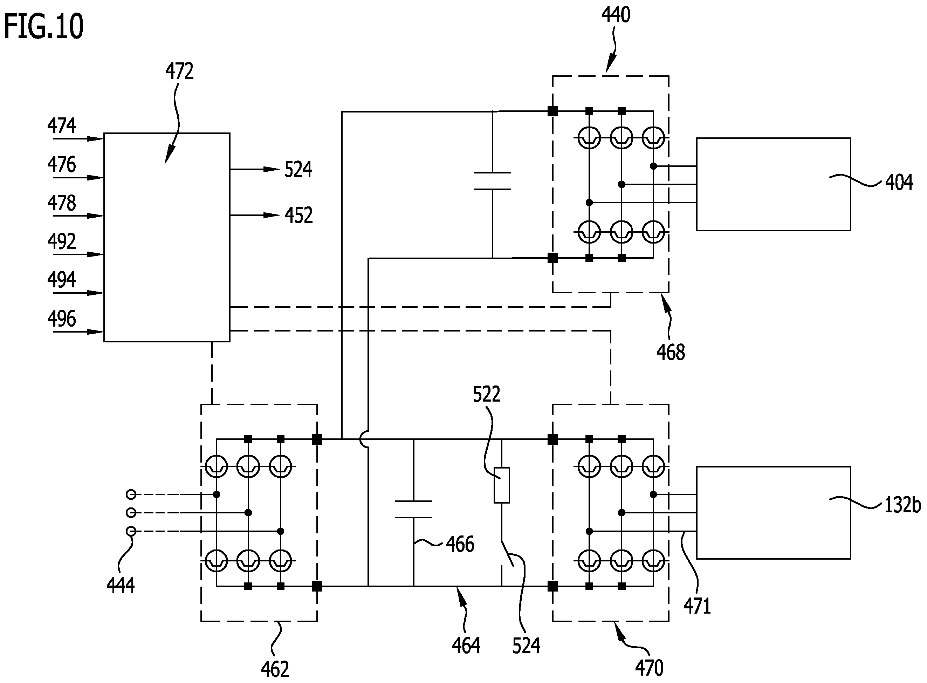

Wie in Fig. 10 dargestellt, umfasst die Expanderbetriebseinheit 440 einen Umrichter, welcher einen Netz-Wechselrichter 462 aufweist, der mit dem AC-Versorgungsnetz 444 verbunden ist und einen DC-Zwischenkreis 464 speist, der Energie durch eine Kapazität 466 speichert.

Des Weiteren ist zum Betrieb des Motors 404 zum Antreiben des Kompressors 402 ein Kompressor-Wechselrichter 440 vorgesehen, welcher mit dem DC-Zwischenkreis 464 verbunden ist.

Außerdem ist zum Betreiben der Generatoreinheit 132b ebenfalls ein Generator-Wechselrichter 470 vorgesehen.

Zum Start des Kreislaufs 400 für das Arbeitsmedium wirkt der Netz-Wechselrichter 462 als Gleichrichter zur Speisung des DC-Zwischenkreises 464 aus dem Versorgungsnetz 444, wobei der Kompressor-Wechselrichter 468 aus dem DC-Zwischenkreis 464 zum Betrieb des Motors 404 für den Kompressor 402 Leistung entnimmt, um den Motor 404 bei einer geeigneten Drehzahl zu betreiben.

Hierzu wird der Kompressor-Wechselrichter 468 von einer Steuereinheit 472 gesteuert, die ein Signal 474 von einer übergeordneten Steuerung für den Kreislauf 400 empfängt, das zum Erreichen und Aufrechterhalten des Hochdrucks am Hochdruckanschluss 84 der Expandermaschine 10b eine Sollvorgabe für die Drehzahl des Motors 404 und somit des Kompressors 402 darstellt.

Nach Aufbau eines ausreichend großen Hochdrucks PH in dem Kreislauf 400 für das Arbeitsmedium, insbesondere auch unter Zufuhr des Wärmestroms 416 zu dem Arbeitsmedium, stellt sich zwischen dem Hochdruckanschluss 84 der Expandermaschine 10b und dem Niederdruckanschluss 74 der Expandermaschine 10b eine ausreichend große Druckdifferenz ein, die die Schraubenläufer 36, 38 und die Generatoreinheit 132b antreibt.

Die Generatoreinheit 132b umfasst vorzugsweise eine Asynchronmaschine, welche mit dem drei Phasen Anschluss 471 des Generator-Wechselrichters 470 verbunden ist, es ist aber auch möglich, alternativ eine Permanentmagnetmaschine einzusetzen.

Im Fall einer Asynchronmaschine wird zweckmäßigerweise der Generator-Wechselrichter 470 beim Anlaufenlassen der Generatoreinheit 132b dazu eingesetzt, diese zum Anlaufen bis zu einer niedrigen Drehzahl zu bestromen, um eine Vormagnetisierung sicherzustellen.

Wenn von der Generatoreinheit 132b Strom erzeugt wird, wird dieser durch den Wechselrichter 470 umgerichtet und in den DC-Zwischenkreis 464 eingespeist.

Da bei dem Kreislauf 400 für das Arbeitsmedium die von der Expandermaschine 10b erzeugte Leistung größer ist als die für den Betrieb des Kompressors 402 vom Motor 404 aufgebrachte Leistung, entsteht in dem DC-Zwischenkreis 464 ein Leistungsüberschuss, so dass in diesem Fall der Netz-Wechselrichter 462 durch die Steuereinheit 472 so betrieben wird, dass elektrische Leistung aus dem DC-Zwischenkreis 464 in das Versorgungsnetz 444 eingespeist wird, wobei der DC-Zwischenkreis 464 gleichzeitig noch den Wechselrichter 464 zum Antrieb des Motors 404 nach wie vor speist.

Dabei überwacht die Steuereinheit 472 ein Signal 476 betreffend die Netzstabilität des Versorgungsnetzes 444, ein Signal 468 betreffend ein ausreichend großes Druckverhältnis oder eine ausreichend große Druckdifferenz zwischen der Hochdruckseite 64 und der Niederdruckseite 62 beim Betrieb der Expandermaschine 10b, wobei dies gemessen wird durch Sensoren 482 und 484, die beispielsweise der Hochdruckseite 64 und der Niederdruckseite 62 zugeordnet sind, sowie ein Hochdrucksignal 496, welches den Hochdruck beim Betrieb der Expandermaschine, gemessen beispielsweise durch den Sensor 482, angibt, wobei beim Unterschreiten eines jeweiligen vorgegebenen Grenzwerts, diese Signale ein Abschalten der Generatoreinheit 132b auslösen, in gleicher Weise wie das Abschaltsignal oder das Notaussignal 494.

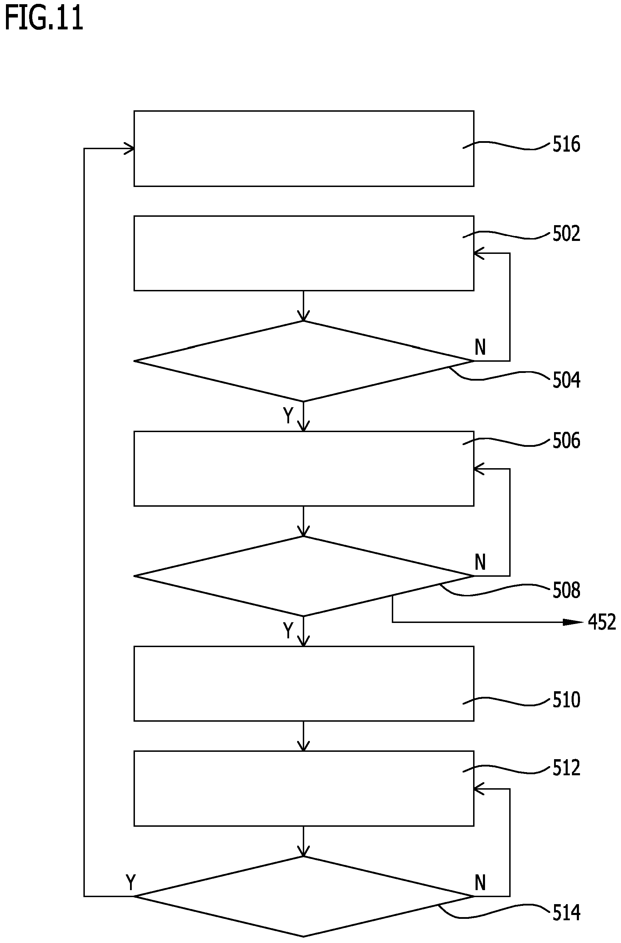

Der Betrieb des Generator-Wechselrichters 470 für die Generatoreinheit 132b erfolgt erfindungsgemäß durch das in Fig. 11 dargestellte Ablaufschema.

In einem Normalbetriebsmodus 502 wird der Generator-Wechselrichter 470 so betrieben, dass er entsprechend der Drehzahl der Generatoreinheit 132b die erzeugte elektrische Leistung in den DC-Zwischenkreis 464 einspeist, die dann von dem Netz-Wechselrichter 462, abzüglich der Leistung für den Motor 404, in das Versorgungsnetz 444 mit der diesem entsprechenden Frequenz eingespeist wird.

Gleichzeitig wird in einem Überwachungsmodus 504 permanent überwacht, ob das Signal 476 betreffend das Versorgungsnetz 444, das Signal 468 betreffend das erforderliche Druckverhältnis an der Expandermaschine 10b, und das Signal 496 betreffend den Hochdruck im Kreislauf 400 des Arbeitsmediums oder das Nichtvorliegen des Abschaltsignals 492 oder des Notaussignals 494 die Aufrechterhaltung des Normalbetriebsmodus 502 rechtfertigen oder ob ein Übergang in einen Abschaltmodus 506 erforderlich ist, um insbesondere die voranstehend beschriebenen Probleme am Dichtspalt 130 zu vermeiden.

Im Normalbetriebsmodus 502 ist die Aufrechterhaltung des hochdruckseitigen Dichtspalts 130 gewährleistet, wie voranstehend beschrieben. Probleme mit Abrasion oder Erhitzung oder Überhitzung der Endflächen 122, 124 und der Endwandflächen 126, 128 treten aber insbesondere beim Beenden des Betriebs der Generatoreinheit 132b auf.

Ist dies der Fall, so erfolgt in dem Betriebsbeendigungsmodus, insbesondere dem Abbremsmodus 506, durch Ansteuerung des Generator-Wechselrichters 470 mittels der Steuereinheit 472 ein Abbremsen der Generatoreinheit 132b durch geeignetes Betreiben der Wicklungen der Generatoreinheit 132b mittels des Generator-Wechselrichters 470 mit sich reduzierender Frequenz unter Inanspruchnahme der in dem DC-Zwischenkreis 464 zur Verfügung stehenden Leistung, wobei bei zur Verfügung stehendem AC-Versorgungsnetz 444 der Netz-Wechselrichter 462 die zum Abbremsen erforderliche Leistung zwischen dem AC-Versorgungsnetz 444 in den DC-Zwischenkreis 464 austauscht.

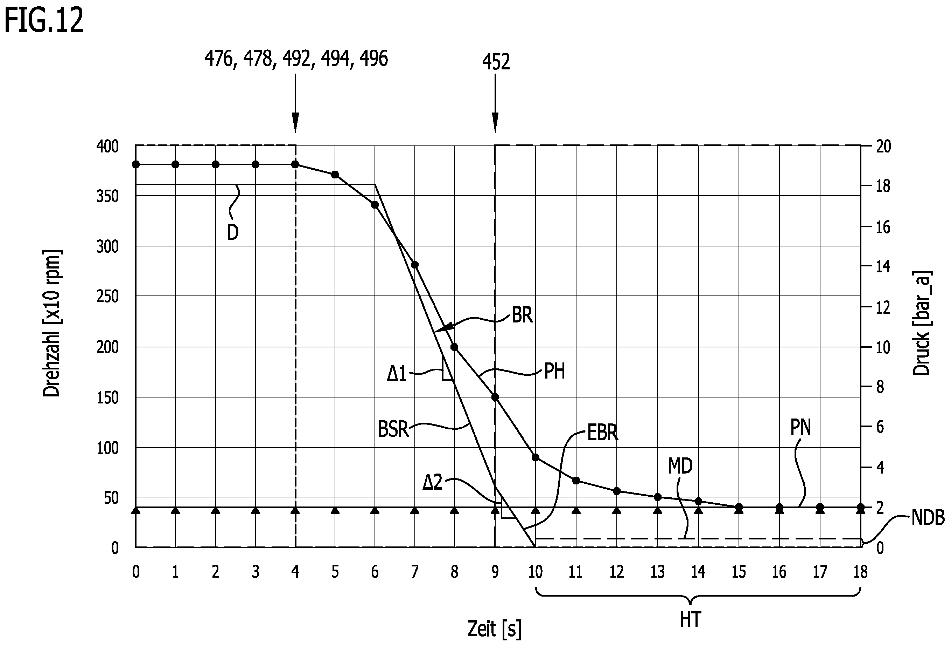

Im Betriebsbeendigungsmodus, insbesondere Abbremsmodus 506, erfolgt eine Reduzierung der Drehzahl D der Schraubenläufer 36, 38 durch die Generatoreinheit 132, vorzugsweise gemäß einer der Steuereinheit 472 vorgegebenen Abbremsrampe BR, welche den Verlauf der Drehzahl D der Generatoreinheit 132b und somit auch der Schraubenläufer 36, 38 über der Zeit vorgibt, wie in Fig. 12 dargestellt.

Insbesondere setzt die Abbremsrampe BR zeitverzögert nach einem der ein Abbremsen der Generatoreinheit 132b veranlassenden Signale 476, 478, 492, 494, 496 ein und definiert einen kontinuierlichen Verlauf der Abnahme der Drehzahl der Generatoreinheit 132b.

Beispielsweise umfasst die Abbremsrampe BR mindestens eine erste Bremsstartrampe BSR, welche mit einer vorgebbaren Drehzahlreduktion pro Zeiteinheit die Drehzahl der Generatoreinheit 132b entsprechend einem ersten Drehzahlgraddient Δ1 pro Zeiteinheit durch Reduktion der Frequenz des Generator-Wechselrichters 470 reduziert, und eine Endbremsrampe EBR, die beispielsweise eine geringere Drehzahlreduktion pro Zeiteinheit, entsprechend einem zweiten Drehzahlgradient Δ2 pro Zeiteinheit zum Gegenstand hat als die Bremsstartrampe BSR, wobei die Endbremsrampe EBR ausgehend von einem Endwert der Bremsstartrampe BSR die Drehzahl der Generatoreinheit 132b auf einen Niedrigstdrehzahlbereich NDB unterhalb einer vorgegebenen maximalen Drehzahl MD reduziert, die eine Obergrenze für einen Drehzahlbereich für einen beschädigungsfreien Betrieb der Schraubenläufer 36, 38, darstellt.

In einem Überwachungsmodus 508 wird überwacht, ob die vorgegebene maximale Drehzahl MD, der Schraubenläufer 36, 38 und - bei einer direkten Kopplung mit der Generatoreinheit 132b wie bei dem dargestellten Ausführungsbeispiel - auch der Generatoreinheit 132b, beispielsweise kleiner 5 Hz, insbesondere kleiner 3 Hz oder sogar 0 Hz erreicht, eingehalten oder unterschritten wird.

Ist dies der Fall, wird in einem Haltemodus 510 sichergestellt, dass die maximale Drehzahl MD für eine Haltezeit HT von mindestens 2, besser 5, noch besser 10 Sekunden und maximal eine Minute durch Bestromen der Wicklungen der Generatoreinheit 132b mittels des Wechselrichters 470 gehalten oder unterschritten wird.

Alternativ dazu wird der Haltemodus so lange aufrechterhalten, bis die Druckdifferenz, gemessen mittels der Sensoren 484, 484, einen definierten Wert unterschritten hat.

Zum Erreichen und/oder Aufrechterhalten des Niedrigstdrehzahlbereichs NDB wird, ergänzend zum Abbremsmodus 506, beispielsweise bei einer vorgegebenen Drehzahl oder einem vorgegebenen Wert des Hochdrucks PH oder auch noch im Haltemodus 510, von der Steuerung 472 insbesondere auch das Schaltventil 452 die Druckentlastungsleitung 454 geschlossen, um durch die zusätzliche Druckentlastung auf Niederdruck PN das vollständige Abbremsen und das Einhalten des Niedrigstdrehzahlbereichs NDB bei oder unterhalb der maximalen Drehzahl MD zu unterstützen, so dass die maximale Drehzahl MD beibehalten oder noch besser unterschritten wird, und somit die Schraubenläufer 36, 38 nicht durch die in der Expandermaschine 10a vorherrschenden Druckverhältnisse veranlasst werden können, die Drehzahl wieder zu erhöhen, um Beschädigungen durch Reibung der bei der Drehung der Schraubenläufer einsetzenden Kräfte auf die Schraubenläufer 36, 38 insbesondere entgegengesetzt zu den Richtungen 112 und 114, zu verhindern, die insbesondere bei einer Drehung der Schraubenläufer 36, 38 zu einer Abrasion oder mindestens einer Erhitzung im Bereich der Endflächen 126, 128 bewirken, die zu dauerhaften Schäden führen können.

Je nach Einsatz der Expandermaschine 10b kann das gezielte Abbremsen und das Halten des abgebremsten Zustands noch ergänzt werden durch den vorstehend beschriebenen Schmiermittelstützfilm 210.

Stellt sich allerdings ein Ausfall des Versorgungsnetztes 444 ein, erkannt durch das Signal 476, so ist in dem DC-Zwischenkreis ein Widerstand 522 vorgesehen, der durch einen von der Steuereinheit 472 aktivierbaren Schalter 524 aktivierbar ist, um die vom Generator-Wechselrichter 470 in den DC-Zwischenkreis eingespeiste Leistung aufzunehmen, wenn diese nicht weiter in das Versorgungsnetz 444 rückgespeist werden kann.

Ferner ist die Kapazität 466 im DC-Zwischenkreis so ausgelegt, dass die in dieser gespeicherte Energie ausreicht, um die Generatoreinheit 132b abzubremsen und während des Haltezeitraums HT durch geeignetes Bestromen der Wicklungen der Generatoreinheit 132b mittels des Generator-Wechselrichters 470 bei der maximalen Drehzahl MD oder einer geringeren Drehzahl zu halten.

Insbesondere wird der Haltemodus 510 so lange aufrechterhalten, dass davon ausgegangen werden kann, dass in der Expandermaschine 10b keine auf die Schraubenläufer 36, 38 einwirkenden Druckdifferenzen mehr vorliegen.

Nach Beendigung dieses Haltemodus 510 geht die Steuereinheit 472 in einen Wartemodus 512 über, in welchem die Voreinstellungen für einen erneuten Start der Generatoreinheit 132b durch den Generator-Wechselrichter 470 wieder aufgenommen werden.

Dieser Wartemodus 512 wird überwacht durch einen Warteüberwachungsmodus 514, der im Fall eines Signals für einen Neustart wiederum einen Übergang in einen Anlaufmodus 516 einleitet, in welchem zunächst durch Start des Kompressors 402 eine minimale Druckdifferenz zwischen dem Druck PH am Hochdruckanschluss 84 und dem Druck PN am Niederdruckanschluss 74 der Expandermaschine 10b aufgebaut wird, bei welchem die Schraubenläufer 36, 38 noch frei drehen können.

Mit dem dann erfolgenden Systemstart ST wird die Druckentlastung 450 mit dem Öffnen des Schaltventils 452 unwirksam gemacht und die Drehzahl D der Schraubenläufer 36, 38 gesteigert.

## Patentansprüche

1. Verfahren zum Betreiben einer Verdichter-/Expandermaschine in einem Kreislauf (300, 400) für ein Arbeitsmedium, wobei die Verdichter-/Expandermaschine (10) ein Maschinengehäuse (11) mit einem Schraubenläufergehäuse (12) aufweist, in welchem mindestens ein zwischen einer Niederdruckseite (62) und einer Hochdruckseite (64) angeordneter Schraubenläufer (36, 38) zum Verdichten/Expandieren des Arbeitsmediums angeordnet ist und mit einer Motor-/Generatoreinheit (132) gekoppelt ist,
**dadurch gekennzeichnet, dass** zum Betrieb der Verdichter-/Expandermaschine (10a, b) eine Betriebssteuereinheit (340, 440) vorgesehen ist, welche im Fall einer Beendigung des Betriebs der Verdichter-/Expandermaschine (10a, b) die Motor-/Generatoreinheit (132a, b) gemäß einem vorgegebenen Drehzahlverlauf bis zum Erreichen eines Beschädigungen im Bereich der Schraubenläufer (36, 38) verhindernden Niedrigstdrehzahlbereichs (NDB) des mindestens einen der Schraubenläufer (36, 38) betreibt, dass die Betriebssteuereinheit (340, 440) die Motor-/Generatoreinheit (132a, b) im Anschluss an die Abbremsrampe (BR) in dem Niedrigstdrehzahlbereich (NDB) des mindestens einen Schraubenläufers (36, 38) weiterbetreibt, welcher eine derart geringe Drehzahl des mindestens einen der Schraubenläufer (36, 38) zur Folge hat, dass im Bereich des Dichtspalts (130) zwischen der hochdruckseitigen Endfläche (122, 124) des mindestens einen der Schraubenläufer (36, 38) und der jeweiligen Endwandfläche (126, 128) keine Abrasionen, Erhitzungen oder Überhitzungen auftreten, dass der Niedrigstdrehzahlbereich (NDB) sich von einer Drehzahl des mindestens einen der Schraubenläufer (36, 38) von 20 Hz bis 0 Hz erstreckt, dass die Betriebssteuereinheit (340, 440) den Niedrigstdrehzahlbereich (NDB) des mindestens einen Schraubenläufers (36, 38) während einer vorgegebenen Haltezeit (HT) aufrecht erhält, welche mindestens 3 Sekunden beträgt.

2. Verfahren nach Anspruch 1, **dadurch gekennzeichnet, dass** der Drehzahlverlauf der Motor-/Generatoreinheit durch eine zeitlich aufeinanderfolgende Sequenz von Drehzahldaten vorgegeben wird, insbesondere dass die zeitlich aufeinanderfolgenden Drehzahldaten aufeinanderfolgende, stets niedriger werdende Drehzahlwerte aufweisen, insbesondere dass die Drehzahlwerte eine Abbremsrampe (BR) über der Zeit bilden, insbesondere dass die Drehzahlwerte der Abbremsrampe (BR) gemäß mindestens einem Gradient (Δ1, Δ2), über der Zeit abnehmen, dass insbesondere die Abbremsrampe (BR) eine Bremsstartrampe (BSR) aufweist, bei welcher die Drehzahlwerte gemäß einem ersten Gradient (Δ1) über der Zeit abnehmen und/oder, dass insbesondere die Abbremsrampe (BR) eine sich an die Bremsstartrampe (BSR) anschließende Endbremsrampe (EBR) aufweist, bei welcher die Drehzahlwerte gemäß einem zweiten Gradient (Δ2) über der Zeit abnehmen.

3. Verfahren nach einem der voranstehenden Ansprüche, **dadurch gekennzeichnet, dass** die Haltezeit (HT) mindestens 5 Sekunden beträgt, insbesondere dass die Haltezeit (HT) so lange aufrechterhalten wird, dass davon ausgegangen werden kann, dass in der Verdichter-/Expandermaschine (10a, b) keine auf die Schraubenläufer (36, 38) wirkenden Druckdifferenzen zwischen der Niederdruckseite (62) und der Hochdruckseite (64) mehr vorliegen und/oder, dass insbesondere die Haltezeit (HT) maximal drei Minuten beträgt.

4. Verfahren nach einem der voranstehenden Ansprüche, **dadurch gekennzeichnet, dass** die Betriebssteuereinheit (340, 440) den Niedrigstdrehzahlbereich (NDB) des mindestens einen Schraubenläufers (36, 38) so lange aufrecht erhält, bis in der Verdichter-/Expandermaschine (10a, b) keine auf die Schraubenläufer (36, 38) beschleunigend wirkenden Druckdifferenzen zwischen der Niederdruckseite (62) und der Hochdruckseite (64) mehr vorliegen.

5. Verfahren nach einem der voranstehenden Ansprüche, **dadurch gekennzeichnet, dass** die Betriebssteuereinheit (340, 440) im Normalbetrieb der Verdichter-/Expandermaschine (10a, b) in einem Normalbetriebsmodus (382, 502) arbeitet, insbesondere dass die Betriebssteuereinheit (340, 440) im Normalbetriebsmodus (382, 502) von einem Überwachungsmodus (384, 504) überwacht wird, welcher Signale erfasst, die eine Beendigung des Betriebs der Verdichter-/Expandereinheit (10a, b) erfordern, und dass die Betriebssteuereinheit (340, 440) bei Vorliegen eines derartigen Signals in einen Betriebsbeendigungsmodus (386, 506) übergeht, insbesondere dass im Betriebsbeendigungsmodus (386, 506) die Motor-/Generatoreinheit (132a, b) gemäß dem vorgegebenen Drehzahlverlauf zur Beendigung des Betriebs der Verdichter-/Expandermaschine (10a, b) betrieben wird und/oder, dass insbesondere der Betriebsbeendigungsmodus (386, 506) durch einen Drehzahlüberwachungsmodus (388, 508) überwacht wird, welcher ein Erreichen des Niedrigstdrehzahlbereichs (NDB) des mindestens einen Schraubenläufers (36, 38) erfasst, insbesondere dass der Drehzahlüberwachungsmodus (388, 508) bei Erreichen des Niedrigstdrehzahlbereichs (NDB) einen Übergang in einen Haltemodus (390, 510) einleitet, in welchem ein Aufrechterhalten der Drehzahl des mindestens einen Schraubenläufers (36, 38) im Niedrigstdrehzahlbereich (NDB) über eine definierte Haltezeit (HT) erfolgt, die sicherstellt, dass bei deren Beendigung keine auf den mindestens einen Schraubenläufer (36, 38) beschleunigend einwirkenden Druckdifferenzen vorliegen und/oder, dass insbesondere der Drehzahlüberwachungsmodus (388, 508) bei Erreichen des Niedrigstdrehzahlbereichs (NDB) einen Übergang in einen Haltemodus (390, 510) einleitet, in welchem ein Aufrechterhalten der Drehzahl des mindestens einen Schraubenläufers (36, 38) im Niedrigstdrehzahlbereich (NDB) so lange erfolgt, bis keine auf den mindestens einen Schraubenläufer (36, 38) beschleunigend einwirkenden Druckdifferenzen vorliegen und/oder, dass insbesondere die Betriebssteuereinheit (340, 440) während des Betriebsbeendigungsmodus (386, 506) und/oder während des Haltemodus (390, 510) eine Druckentlastung (350, 450) zwischen der Niederdruckseite (62) und der Hochdruckseite (64) der Verdichter-/Expandermaschine aktiviert.

6. Verfahren nach einem der voranstehenden Ansprüche, **dadurch gekennzeichnet, dass** die Verdichter-/Expandermaschine (10) als Verdichtermaschine (10a) arbeitet, dass die Betriebssteuereinheit (340, 440) als Verdichterbetriebssteuereinheit (340) ausgebildet ist und einen Umrichter (360) umfasst, welcher einen Gleichrichter (362) aufweist, der aus einem AC-Versorgungsnetz (344) einen DC-Zwischenkreis (364) speist, und dass der Umrichter (360) einen Wechselrichter (368) aufweist, welcher aus dem DC-Zwischenkreis (364) die Motoreinheit (132a) der Verdichtermaschine (10a) speist.

7. Verfahren nach einem der Ansprüche 1 bis 5, **dadurch gekennzeichnet, dass** die Verdichter-/Expandermaschine als Expandermaschine (10b) arbeitet, dass die Betriebssteuereinheit als Expanderbetriebssteuereinheit (440) ausgebildet ist und einen Umrichter (460) aufweist, der einen Netz-Wechselrichter (462) aufweist, der seinerseits mit einem AC-Versorgungsnetz (444) verbunden ist und in einen DC-Zwischenkreis (464) Energie vom Versorgungsnetz einspeist oder Energie aus dem DC-Zwischenkreis (464) in das Versorgungsnetz (444) einspeist, dass die Expanderbetriebssteuereinheit (440) einen Kompressor-Wechselrichter (468) aufweist, welcher aus dem DC-Zwischenkreis (464) einen Motor (404) für einen Kompressor (402) für einen in einem thermodynamischen Kreisprozess betriebenen Kreislauf (400) speist, dass die Expanderbetriebssteuereinheit (440) einen Generator-Wechselrichter (470) aufweist, welcher von der Generatoreinheit (132b) zugeführte Energie in den DC-Zwischenkreis (464) einspeist.

8. Verfahren zum Betreiben eines Kältemittelkreislaufs (300), insbesondere einer Kühleinrichtung oder einer Wärmepumpe oder einer Dampfkomressionsanlage, umfassend einen Wärmetauscher (302), in welchem expandiertes Kältemittel Wärme aufnimmt, eine Verdichtermaschine (10a) zum Verdichten des expandierten Kältemittels und einen Wärmetauscher (322), in welchem das verdichtete Kältemittel Wärme abgibt, sowie eine Expansionseinheit (330) zum Expandieren des verdichteten Kältemittels, **dadurch gekennzeichnet, dass** die Verdichtermaschine (10a) gemäß einem der Ansprüche 1 bis 7 betrieben wird.

9. Verfahren zum Betreiben eines thermodynamischen Kreisprozesses (400), insbesondere einer ORC Anlage oder einer Dampfexpansionsanlage, umfassend einen Kompressor (402) zum Verdichten des Arbeitsmediums, einen Wärmetauscher (412) zum Erhitzen des Arbeitsmediums, eine Expandermaschine (10b) zum Expandieren des verdichteten und erhitzten Arbeitsmediums und einen Wärmetauscher (424) zum Abkühlen des expandierten Arbeitsmediums, **dadurch gekennzeichnet, dass** die Expandermaschine (10b) gemäß einem der voranstehenden Ansprüche 1 bis 6 und 8 betrieben wird.

10. Verdichter-/Expandermaschine zum Betrieb in einem Kreislauf (300, 400) für ein Arbeitsmedium, wobei die Verdichter-/Expandermaschine (10) ein Maschinengehäuse (11) mit einem Schraubenläufergehäuse (12) aufweist, in welchem mindestens ein zwischen einer Niederdruckseite (62) und einer Hochdruckseite (64) angeordneter Schraubenläufer (36, 38) zum Verdichten/Expandieren des Arbeitsmediums angeordnet ist und mit einer Motor-/Generatoreinheit (132) gekoppelt ist,
**dadurch gekennzeichnet, dass** zum Betrieb der Verdichter-/Expandermaschine (10a, b) eine Betriebssteuereinheit (340, 440) vorgesehen ist, welche im Fall einer Beendigung des Betriebs der Verdichter-/Expandermaschine (10a, b) die Motor-/Generatoreinheit (132a, b) gemäß einem vorgegebenen Drehzahlverlauf bis zum Erreichen eines Beschädigungen im Bereich der Schraubenläufer (36, 38) verhindernden Niedrigstdrehzahlbereichs (NDB) des mindestens einen der Schraubenläufer (36, 38) betreibt, dass die Betriebssteuereinheit (340, 440) die Motorgeneratoreinheit (132a, b) im Anschluss an die Abbremsrampe (BR) in dem Niedrigstdrehzahlbereich (NDB) des mindestens einen Schraubenläufers (36, 38) weiterbetreibt, welcher eine derart geringe Drehzahl des mindestens einen der Schraubenläufer (36, 38) zur Folge hat, dass im Bereich des Dichtspalts (130) zwischen der hochdruckseitigen Endfläche (122, 124) des mindestens einen der Schraubenläufer (36, 38) und der jeweiligen Endwandfläche (126, 128) keine Abrasionen, Erhitzungen oder Überhitzungen auftreten und, dass der Niedrigstdrehzahlbereich (NDB) sich von einer Drehzahl des mindestens einen Schraubenläufers (36, 38) von 20 Hz bis 0 Hz erstreckt, dass die Betriebssteuereinheit (340, 440) den Niedrigstdrehzahlbereich (NDB) des mindestens einen Schraubenläufers (36, 38) während einer vorgegebenen Haltezeit (HT) aufrecht erhält, welche mindestens 3 Sekunden beträgt.

11. Verdichter-/Expandermaschine nach Anspruch 10, **dadurch gekennzeichnet, dass** der Drehzahlverlauf der Motor-/Generatoreinheit durch eine zeitlich aufeinanderfolgende Sequenz von Drehzahldaten vorgegeben wird, insbesondere dass die zeitlich aufeinanderfolgenden Drehzahldaten aufeinanderfolgende, stets niedriger werdende Drehzahlwerte aufweisen, insbesondere dass die Drehzahlwerte eine Abbremsrampe (BR) über der Zeit bilden, insbesondere dass die Drehzahlwerte der Abbremsrampe (BR) gemäß mindestens einem Gradient (Δ1, Δ2), über der Zeit abnehmen, insbesondere dass die Abbremsrampe (BR) eine Bremsstartrampe (BSR) aufweist, bei welcher die Drehzahlwerte gemäß einem ersten Gradient (Δ1) über der Zeit abnehmen und/oder, dass insbesondere die Abbremsrampe (BR) eine sich an die Bremsstartrampe (BSR) anschließende Endbremsrampe (EBR) aufweist, bei welcher die Drehzahlwerte gemäß einem zweiten Gradient (Δ2) über der Zeit abnehmen.

12. Verdichter-/Expandermaschine nach einem der voranstehenden Ansprüche 10 bis 11, **dadurch gekennzeichnet**, , insbesonderedass die Haltezeit (HT) mindestens 5 Sekunden beträgt, insbesondere dass die Haltezeit (HT) so lange aufrechterhalten wird, dass davon ausgegangen werden kann, dass in der Verdichter-/Expandermaschine (10a, b) keine auf die Schraubenläufer (36, 38) wirkenden Druckdifferenzen zwischen der Niederdruckseite (62) und der Hochdruckseite (64) mehr vorliegen und/oder, dass insbesondere die Haltezeit (HT) maximal drei Minuten beträgt und/oder, dass insbesondere die Betriebssteuereinheit (340, 440) den Niedrigstdrehzahlbereich (NDB) des mindestens einen Schraubenläufers (36, 38) so lange aufrecht erhält, bis in der Verdichter-/Expandermaschine (10a, b) keine auf die Schraubenläufer (36, 38) beschleunigend wirkenden Druckdifferenzen zwischen der Niederdruckseite (62) und der Hochdruckseite (64) mehr vorliegen.

13. Verdichter-/Expandermaschine nach einem der voranstehenden Ansprüche 10 bis 12, **dadurch gekennzeichnet, dass** die Betriebssteuereinheit (340, 440) im Normalbetrieb der Verdichter-/Expandermaschine (10a, b) in einem Normalbetriebsmodus (382, 502) arbeitet, insbesondere dass die Betriebssteuereinheit (340, 440) im Normalbetriebsmodus (382, 502) von einem Überwachungsmodus (384, 504) überwacht wird, welcher Signale erfasst, die eine Beendigung des Betriebs der Verdichter-/Expandereinheit (10a, b) erfordern, und dass die Betriebssteuereinheit (340, 440) bei Vorliegen eines derartigen Signals in einen Betriebsbeendigungsmodus (386, 506) übergeht, insbesondere dass im Betriebsbeendigungsmodus (386, 506) die Motor-/Generatoreinheit (132a, b) gemäß dem vorgegebenen Drehzahlverlauf zur Beendigung des Betriebs der Verdichter-/Expandermaschine (10a, b) betrieben wird und/oder, dass insbesondere der Betriebsbeendigungsmodus (386, 506) durch einen Drehzahlüberwachungsmodus (388, 508) überwacht wird, welcher ein Erreichen des Niedrigstdrehzahlbereichs (NDB) des mindestens einen Schraubenläufers (36, 38) erfasst, insbesondere dass der Drehzahlüberwachungsmodus (388, 508) bei Erreichen des Niedrigstdrehzahlbereichs (NDB) einen Übergang in einen Haltemodus (390, 510) einleitet, in welchem ein Aufrechterhalten der Drehzahl des mindestens einen der Schraubenläufer (36, 38) im Niedrigstdrehzahlbereich (NDB) über eine definierte Haltezeit (HT) erfolgt, die sicherstellt, dass bei deren Beendigung keine auf den mindestens einen Schraubenläufer (36, 38) beschleunigend einwirkenden Druckdifferenzen vorliegen, insbesondere dass der Drehzahlüberwachungsmodus (388, 508) bei Erreichen des Niedrigstdrehzahlbereichs (NDB) einen Übergang in einen Haltemodus (390, 510) einleitet, in welchem ein Aufrechterhalten der Drehzahl des mindestens einen Schraubenläufers (36, 38) im Niedrigstdrehzahlbereich (NDB) so lange erfolgt, bis keine auf den mindestens einen Schraubenläufer (36, 38) beschleunigend einwirkenden Druckdifferenzen vorliegen.

14. Verdichter-/Expandermaschine nach Anspruch 13, **dadurch gekennzeichnet, dass** die Betriebssteuereinheit (340, 440) während des Betriebsbeendigungsmodus (386, 506) und/oder während des Haltemodus (390, 510) eine Druckentlastung (350, 450) zwischen der Niederdruckseite (62) und der Hochdruckseite (64) der Verdichter-/Expandermaschine aktiviert.

15. Verdichtermaschine nach einem der Ansprüche 10 bis 14, **dadurch gekennzeichnet, dass** die Betriebssteuereinheit (340, 440) als Verdichterbetriebssteuereinheit (340) ausgebildet ist und einen Umrichter (360) umfasst, welcher einen Gleichrichter (362) aufweist, der aus einem AC-Versorgungsnetz (344) einen DC-Zwischenkreis (364) speist, und dass der Umrichter (360) einen Wechselrichter (368) aufweist, welcher aus dem DC-Zwischenkreis (364) die Motoreinheit (132a) der Verdichtermaschine (10a) speist.

16. Expandermaschine nach einem der Ansprüche 10 bis 14, **dadurch gekennzeichnet, dass** die Betriebssteuereinheit als Expanderbetriebssteuereinheit (440) ausgebildet ist und einen Umrichter (460) aufweist, der einen Netz-Wechselrichter (462) aufweist, der seinerseits mit einem AC-Versorgungsnetz (444) verbunden ist und in einen DC-Zwischenkreis (464) Energie vom Versorgungsnetz einspeist oder Energie aus dem DC-Zwischenkreis (464) in das Versorgungsnetz (444) einspeist, dass die Expanderbetriebssteuereinheit (440) einen Kompressor-Wechselrichter (468) aufweist, welcher aus dem DC-Zwischenkreis (464) einen Motor (404) für einen Kompressor (402) für einen in einem thermodynamischen Kreisprozess betriebenen Kreislauf (400) speist, dass die Expanderbetriebssteuereinheit (440) einen Generator-Wechselrichter (470) aufweist, welcher von der Generatoreinheit (132b) zugeführte Energie in den DC-Zwischenkreis (464) einspeist.

17. Kältemittelkreislauf (300) insbesondere einer Kühleinrichtung oder einer Wärmepumpe, umfassend einen Wärmetauscher (302), in welchem expandiertes Kältemittel Wärme aufnimmt, eine Verdichtermaschine (10a) zum Verdichten des expandierten Kältemittels und einen Wärmetauscher (322), in welchem das verdichtete Kältemittel Wärme abgibt, sowie eine Expansionseinheit (330) zum Expandieren des verdichteten Kältemittels, **dadurch gekennzeichnet, dass** die Verdichtermaschine (10a) gemäß einem der Ansprüche 10 bis 16 ausgebildet ist.

18. Thermodynamischer Kreisprozess (400), insbesondere einer ORC Anlage oder einer Dampfexpansionsanlage, umfassend einen Kompressor (402) zum Verdichten des Arbeitsmediums, einen Wärmetauscher (412) zum Erhitzen des Arbeitsmediums, eine Expandermaschine (10b) zum Expandieren des verdichteten und erhitzten Arbeitsmediums und einen Wärmetauscher (424) zum Abkühlen des expandierten Arbeitsmediums, **dadurch gekennzeichnet, dass** die Expandermaschine (10b) gemäß einem der voranstehenden Ansprüche 10 bis 14 und 16 ausgebildet ist.

## Claims

1. A method for operating a compressor/expander machine in a circuit (300, 400) for a working medium, wherein the compressor/expander machine (10) has a machine housing (11) with a screw rotor housing (12) in which at least one screw rotor (36, 38), arranged between a low-pressure side (62) and a high-pressure side (64), is arranged for compressing/expanding the working medium and is coupled to a motor/generator unit (132),
**characterised in that** provided for operating the compressor/expander machine (10a, b) is an operating control unit (340, 440) which, in the event of operation of the compressor/expander machine (10a, b) ending, operates the motor/generator unit (132a, b) in accordance with a predetermined speed characteristic until a minimum speed range (NDB) of the at least one of the screw rotors (36, 38) which prevents damage in the region of the screw rotors (36, 38) is reached, **in that** the operating control unit (340, 440) continues to operate the motor/generator unit (132a, b) after the braking ramp (BR) at the minimum speed range (NDB) of the at least one screw rotor (36, 38), which results in a speed of the at least one of the screw rotors (36, 38) that is low enough for no abrasion, heating or overheating to occur in the region of the sealing gap (130) between the end face (122, 124) on the high-pressure side of the at least one of the screw rotors (36, 38) and the respective end wall face (126, 128), **in that** the minimum speed range (NDB) extends from a speed of the at least one of the screw rotors (36, 38) of 20 Hz to 0 Hz, **in that** the operating control unit (340, 440) maintains the minimum speed range (NDB) of the at least one screw rotor (36, 38) for a predetermined holding period (HT) of at least 3 seconds.

2. A method according to Claim 1, **characterised in that** the speed characteristic of the motor/generator unit is predetermined by a temporally successive sequence of speed data, in particular **in that** the temporally successive speed data has successive ever-decreasing data values, in particular **in that** the speed values form a braking ramp (BR) over time, in particular **in that** the speed values of the braking ramp (BR) decrease over time in accordance with at least one gradient (Δ1, Δ2), **in that** in particular the braking ramp (BR) has a braking start ramp (BSR) in which the speed values decrease over time in accordance with a first gradient (Δ1), and/or **in that** in particular the braking ramp (BR) has a braking end ramp (EBR) which comes after the braking start ramp (BSR) and in which the speed values decrease over time in accordance with a second gradient (Δ2).

3. A method according to one of the preceding claims, **characterised in that** the holding period (HT) is at least 5 seconds, in particular **in that** the holding period (HT) is maintained until it can be assumed that there are no longer any pressure differences in the compressor/expander machine (10a, b) between the low-pressure side (62) and the high-pressure side (64) that affect the screw rotors (36, 38), and/or **in that** in particular the holding period (HT) is at most three minutes.

4. A method according to one of the preceding claims, **characterised in that** the operating control unit (340, 440) maintains the minimum speed range (NDB) of the at least one screw rotor (36, 38) until there are no longer any pressure differences in the compressor/expander machine (10a, b) between the low-pressure side (62) and the high-pressure side (64) that have the effect of accelerating the screw rotors (36, 38).

5. A method according to one of the preceding claims, **characterised in that**, in normal operation of the compressor/expander machine (10a, b), the operating control unit (340, 440) operates in a normal operating mode (382, 502), in particular **in that**, in the normal operating mode (382, 502), the operating control unit (340, 440) is monitored by a monitoring mode (384, 504) which detects signals that require operation of the compressor/expander unit (10a, b) to end, and **in that** if such a signal is present the operating control unit (340, 440) transitions to an operation ending mode (386, 506), in particular **in that** in the operation ending mode (386, 506) the motor/generator unit (132a, b) is operated in accordance with the predetermined speed characteristic for ending operation of the compressor/expander machine (10a, b), and/or **in that** in particular the operation ending mode (386, 506) is monitored by a speed monitoring mode (388, 508) which detects whether the minimum speed range (NDB) of the at least one screw rotor (36, 38) has been reached, in particular **in that**, if the minimum speed range (NDB) is reached, the speed monitoring mode (388, 508) brings about transition to a holding mode (390, 510) in which the speed of the at least one screw rotor (36, 38) is maintained in the minimum speed range (NDB) for a defined holding period (HT) that ensures that when it ends there are no pressure differences that have the effect of accelerating the at least one screw rotor (36, 38), and/or **in that** in particular if the minimum speed range (NDB) is reached the speed monitoring mode (388, 508) brings about transition to a holding mode (390, 510) in which the speed of the at least one screw rotor (36, 38) is maintained in the minimum speed range (NDB) until there are no pressure differences that have the effect of accelerating the at least one screw rotor (36, 38), and/or **in that** in particular during the operation ending mode (386, 506) and/or the holding mode (390, 510) the operating control unit (340, 440) activates a pressure relief (350, 450) between the low-pressure side (62) and the high-pressure side (64) of the compressor/expander machine.

6. A method according to one of the preceding claims, **characterised in that** the compressor/expander machine (10) operates as a compressor machine (10a), **in that** the operating control unit (340, 440) takes the form of a compressor operating control unit (340) and comprises a power converter (360) that has a rectifier (362) which supplies a DC intermediate circuit (364) from an AC supply network (344), and **in that** the power converter (360) has an inverter (368) which supplies the motor unit (132a) of the compressor machine (10a) from the DC intermediate circuit (364).

7. A method according to one of Claims 1 to 5, **characterised in that** the compressor/expander machine operates as an expander machine (10b), **in that** the operating control unit takes the form of an expander operating control unit (440) and has a power converter (460) that has a mains inverter (462) which for its part is connected to an AC supply network (444) and supplies power to a DC intermediate circuit (464) from the supply network or supplies power from the DC intermediate circuit (464) to the supply network (444), **in that** the expander operating control unit (440) has a compressor inverter (468) which, from the DC intermediate circuit (464), supplies a motor (404) for a compressor (402) for a circuit (400) operated in a thermodynamic cycle process, **in that** the expander operating control unit (440) has a generator inverter (470) which supplies power supplied by the generator unit (132b) to the DC intermediate circuit (464).

8. A method for operating a refrigerant circuit (300), in particular a cooling device or a heat pump or a steam compression plant, comprising a heat exchanger (302) in which expanded refrigerant takes up heat, a compressor machine (10a) for compressing the expanded refrigerant, a heat exchanger (322) in which the compressed refrigerant gives off heat, and an expansion unit (330) for expanding the compressed refrigerant, **characterised in that** the compressor machine (10a) is operated according to one of Claims 1 to 7.

9. A method for operating a thermodynamic cycle process (400), in particular an ORC plant or a steam expansion plant, comprising a compressor (402) for compressing the working medium, a heat exchanger (412) for heating the working medium, an expander machine (10b) for expanding the compressed and heated working medium, and a heat exchanger (424) for cooling the expanded working medium, **characterised in that** the expander machine (10b) is operated according to one of Claims 1 to 6 and 8.

10. A compressor/expander machine for operation in a circuit (300, 400) for a working medium, wherein the compressor/expander machine (10) has a machine housing (11) with a screw rotor housing (12) in which at least one screw rotor (36, 38), arranged between a low-pressure side (62) and a high-pressure side (64), is arranged for compressing/expanding the working medium and is coupled to a motor/generator unit (132),
**characterised in that** provided for operating the compressor/expander machine (10a, b) is an operating control unit (340, 440) which, in the event of operation of the compressor/expander machine (10a, b) ending, operates the motor/generator unit (132a, b) in accordance with a predetermined speed characteristic until a minimum speed range (NDB) of the at least one of the screw rotors (36, 38) which prevents damage in the region of the screw rotors (36, 38) is reached, **in that** the operating control unit (340, 440) continues to operate the motor/generator unit (132a, b) after the braking ramp (BR) at the minimum speed range (NDB) of the at least one screw rotor (36, 38), which results in a speed of the at least one of the screw rotors (36, 38) that is low enough for no abrasion, heating or overheating to occur in the region of the sealing gap (130) between the end face (122, 124) on the high-pressure side of the at least one of the screw rotors (36, 38) and the respective end wall face (126, 128), and **in that** the minimum speed range (NDB) extends from a speed of the at least one screw rotor (36, 38) of 20 Hz to 0 Hz, **in that** the operating control unit (340, 440) maintains the minimum speed range (NDB) of the at least one screw rotor (36, 38) for a predetermined holding period (HT) of at least 3 seconds.

11. A compressor/expander machine according to Claim 10, **characterised in that** the speed characteristic of the motor/generator unit is predetermined by a temporally successive sequence of speed data, in particular **in that** the temporally successive speed data has successive ever-decreasing data values, in particular **in that** the speed values form a braking ramp (BR) over time, in particular **in that** the speed values of the braking ramp (BR) decrease over time in accordance with at least one gradient (Δ1, Δ2), in particular **in that** the braking ramp (BR) has a braking start ramp (BSR) in which the speed values decrease over time in accordance with a first gradient (Δ1), and/or **in that** in particular the braking ramp (BR) has a braking end ramp (EBR) which comes after the braking start ramp (BSR) and in which the speed values decrease over time in accordance with a second gradient (Δ2).

12. A compressor/expander machine according to one of preceding Claims 10 to 11, **characterised in** particular **in that** the holding period (HT) is at least 5 seconds, in particular **in that** the holding period (HT) is maintained until it can be assumed that there are no longer any pressure differences in the compressor/expander machine (10a, b) between the low-pressure side (62) and the high-pressure side (64) that affect the screw rotors (36, 38), and/or **in that** in particular the holding period (HT) is at most three minutes, and/or **in that** in particular the operating control unit (340, 440) maintains the minimum speed range (NDB) of the at least one screw rotor (36, 38) until there are no longer any pressure differences in the compressor/expander machine (10a, b) between the low-pressure side (62) and the high-pressure side (64) that have the effect of accelerating the screw rotors (36, 38).

13. A compressor/expander machine according to one of preceding Claims 10 to 12, **characterised in that**, in normal operation of the compressor/expander machine (10a, b), the operating control unit (340, 440) operates in a normal operating mode (382, 502), in particular **in that**, in the normal operating mode (382, 502), the operating control unit (340, 440) is monitored by a monitoring mode (384, 504) which detects signals that require operation of the compressor/expander unit (10a, b) to end, and **in that** if such a signal is present the operating control unit (340, 440) transitions to an operation ending mode (386, 506), in particular **in that** in the operation ending mode (386, 506) the motor/generator unit (132a, b) is operated in accordance with the predetermined speed characteristic for ending operation of the compressor/expander machine (10a, b), and/or **in that** in particular the operation ending mode (386, 506) is monitored by a speed monitoring mode (388, 508) which detects whether the minimum speed range (NDB) of the at least one screw rotor (36, 38) has been reached, in particular **in that**, if the minimum speed range (NDB) is reached, the speed monitoring mode (388, 508) brings about transition to a holding mode (390, 510) in which the speed of the at least one of the screw rotors (36, 38) is maintained in the minimum speed range (NDB) for a defined holding period (HT) that ensures that when it ends there are no pressure differences that have the effect of accelerating the at least one screw rotor (36, 38), in particular **in that** if the minimum speed range (NDB) is reached the speed monitoring mode (388, 508) brings about transition to a holding mode (390, 510) in which the speed of the at least one screw rotor (36, 38) is maintained in the minimum speed range (NDB) until there are no pressure differences that have the effect of accelerating the at least one screw rotor (36, 38).

14. A compressor/expander machine according to Claim 13, **characterised in that** during the operation ending mode (386, 506) and/or the holding mode (390, 510) the operating control unit (340, 440) activates a pressure relief (350, 450) between the low-pressure side (62) and the high-pressure side (64) of the compressor/expander machine.

15. A compressor machine according to one of Claims 10 to 14, **characterised in that** the operating control unit (340, 440) takes the form of a compressor operating control unit (340) and comprises a power converter (360) that has a rectifier (362) which supplies a DC intermediate circuit (364) from an AC supply network (344), and **in that** the power converter (360) has an inverter (368) which supplies the motor unit (132a) of the compressor machine (10a) from the DC intermediate circuit (364).

16. An expander machine according to one of Claims 10 to 14, **characterised in that** the operating control unit takes the form of an expander operating control unit (440) and has a power converter (460) that has a mains inverter (462) which for its part is connected to an AC supply network (444) and supplies power to a DC intermediate circuit (464) from the supply network or supplies power from the DC intermediate circuit (464) to the supply network (444), **in that** the expander operating control unit (440) has a compressor inverter (468) which, from the DC intermediate circuit (464), supplies a motor (404) for a compressor (402) for a circuit (400) operated in a thermodynamic cycle process, **in that** the expander operating control unit (440) has a generator inverter (470) which supplies power supplied by the generator unit (132b) to the DC intermediate circuit (464).

17. A refrigerant circuit (300), in particular of a cooling device or a heat pump, comprising a heat exchanger (302) in which expanded refrigerant takes up heat, a compressor machine (10a) for compressing the expanded refrigerant, a heat exchanger (322) in which the compressed refrigerant gives off heat, and an expansion unit (330) for expanding the compressed refrigerant, **characterised in that** the compressor machine (10a) takes a form according to one of Claims 10 to 16.

18. A thermodynamic cycle process (400), in particular of an ORC plant or a steam expansion plant, comprising a compressor (402) for compressing the working medium, a heat exchanger (412) for heating the working medium, an expander machine (10b) for expanding the compressed and heated working medium, and a heat exchanger (424) for cooling the expanded working medium, **characterised in that** the expander machine (10b) takes a form according to one of preceding Claims 10 to 14 and 16.

## Revendications

1. Procédé de fonctionnement d'une machine de compression/détendeur dans un circuit (300, 400) pour un fluide de travail, dans lequel la machine de compression/détendeur (10) présente un carter de machine (11) avec un carter de rotor hélicoïdal (12) dans lequel au moins un rotor hélicoïdal (36, 38) disposé entre un côté basse pression (62) et un côté haute pression (64) pour comprimer/détendre le fluide de travail est disposé et est couplé à un ensemble moteur/générateur (132),
**caractérisé en ce qu'**un ensemble de commande de fonctionnement (340, 440) est prévu pour le fonctionnement de la machine de compression/détendeur (10a, b), qui dans le cas d'une fin du fonctionnement de la machine de compression/détendeur (10a, b) fait fonctionner l'ensemble moteur/générateur (132a, b) selon une courbe de vitesse de rotation prédéterminée jusqu'à l'atteinte d'une plage de vitesses de rotation les plus basses (NDB) de l'au moins l'un des rotors hélicoïdaux (36, 38) empêchant des endommagements dans la zone des rotors hélicoïdaux (36, 38), que l'ensemble de commande de fonctionnement (340, 440) continue à faire fonctionner l'ensemble moteur/générateur (132a, b) après la rampe de décélération (BR) dans la plage de vitesses de rotation les plus basses (NDB) de l'au moins un rotor hélicoïdal (36, 38), laquelle entraîne une vitesse de rotation de l'au moins l'un des rotors hélicoïdaux (36, 38) tellement faible que dans la zone de la fente d'étanchéité (130) entre la surface d'extrémité côté haute pression (122, 124) de l'au moins l'un des rotors hélicoïdaux (36, 38) et la surface de paroi d'extrémité (126, 128) correspondante aucun(e) abrasion, échauffement ou surchauffe ne se produit, que la plage de vitesses de rotation les plus basses (NDB) s'étend à partir d'une vitesse de rotation de l'au moins l'un des rotors hélicoïdaux (36, 38) de 20 Hz à 0 Hz, que l'ensemble de commande de fonctionnement (340, 440) maintient la plage de vitesses de rotation les plus basses (NDB) de l'au moins un rotor hélicoïdal (36, 38) pendant un temps de maintien (HT) prédéterminé qui est d'au moins 3 secondes.

2. Procédé selon la revendication 1, **caractérisé en ce que** la courbe de vitesse de rotation de l'ensemble moteur/générateur est prédéterminée par une séquence chronologique successive de données de vitesse de rotation, en particulier que les données de vitesse de rotation chronologiques successives présentent des valeurs de vitesse de rotation successives de plus en plus basses, en particulier que les valeurs de vitesse de rotation forment une rampe de décélération (BR) dans le temps, en particulier que les valeurs de vitesse de rotation de la rampe de décélération (BR) diminuent selon au moins un gradient (Δ1, Δ2) dans le temps, qu'en particulier la rampe de décélération (BR) présente une rampe de démarrage de freinage (BSR) pour laquelle les valeurs de vitesse de rotation diminuent selon un premier gradient (Δ1) dans le temps et/ou qu'en particulier la rampe de décélération (BR) présente une rampe de freinage final (EBR) suivant la rampe de démarrage de freinage (BSR) pour laquelle les valeurs de vitesse de rotation diminuent selon un second gradient (Δ2) dans le temps.

3. Procédé selon l'une quelconque des revendications précédentes, **caractérisé en ce que** le temps de maintien (HT) est d'au moins 5 secondes, en particulier que le temps de maintien (HT) est maintenu aussi longtemps qu'il peut être supposé qu'il n'y a plus de différences de pression agissant sur les rotors hélicoïdaux (36, 38) entre le côté basse pression (62) et le côté haute pression (64) dans la machine de compression/détendeur (10a, b) et/ou qu'en particulier le temps de maintien (HT) est de trois minutes maximum.

4. Procédé selon l'une quelconque des revendications précédentes, **caractérisé en ce que** l'ensemble de commande de fonctionnement (340, 440) maintient la plage de vitesses de rotation les plus basses (NDB) de l'au moins un rotor hélicoïdal (36, 38) jusqu'à ce qu'il n'y ait plus de différences de pression agissant en accélération sur les rotors hélicoïdaux (36, 38) entre le côté basse pression (62) et le côté haute pression (64) dans la machine de compression/détendeur (10a, b).

5. Procédé selon l'une quelconque des revendications précédentes, **caractérisé en ce que** l'ensemble de commande de fonctionnement (340, 440) en fonctionnement normal de la machine de compression/détendeur (10a, b) marche dans un mode de fonctionnement normal (382, 502), en particulier que l'ensemble de commande de fonctionnement (340, 440) dans le mode de fonctionnement normal (382, 502) est surveillé par un mode de surveillance (384, 504) qui détecte des signaux qui exigent une fin du fonctionnement de l'ensemble compresseur/détendeur (10a, b), et que l'ensemble de commande de fonctionnement (340, 440) passe dans un mode de fin de fonctionnement (386, 506) en présence d'un tel signal, en particulier que dans le mode de fin de fonctionnement (386, 506) l'ensemble moteur/générateur (132a, b) fonctionne selon la courbe de vitesse de rotation prédéterminée pour terminer le fonctionnement de la machine de compression/détendeur (10a, b) et/ou qu'en particulier le mode de fin de fonctionnement (386, 506) est surveillé par un mode de surveillance de vitesse de rotation (388, 508) qui détecte une atteinte de la plage de vitesses de rotation les plus basses (NDB) de l'au moins un rotor hélicoïdal (36, 38), en particulier que le mode de surveillance de vitesse de rotation (388, 508) à l'atteinte de la plage de vitesses de rotation les plus basses (NDB) initie un passage dans un mode de maintien (390, 510) dans lequel un maintien de la vitesse de rotation de l'au moins un rotor hélicoïdal (36, 38) dans la plage de vitesses de rotation les plus basses (NDB) s'effectue pendant un temps de maintien (HT) défini qui assure qu'à la fin de celui-ci il n'y a pas de différences de pression agissant en accélération sur l'au moins un rotor hélicoïdal (36, 38) et/ou qu'en particulier le mode de surveillance de vitesse de rotation (388, 508) à l'atteinte de la plage de vitesses de rotation les plus basses (NDB) initie un passage dans un mode de maintien (390, 510) dans lequel un maintien de la vitesse de rotation de l'au moins un rotor hélicoïdal (36, 38) dans la plage de vitesses de rotation les plus basses (NDB) s'effectue jusqu'à ce qu'aucune différence de pression agissant en accélération sur l'au moins un rotor hélicoïdal (36, 38) ne soit présente et/ou qu'en particulier l'ensemble de commande de fonctionnement (340, 440) active une décharge de pression (350, 450) entre le côté basse pression (62) et le côté haute pression (64) de la machine de compression/détendeur pendant le mode de fin de fonctionnement (386, 506) et/ou pendant le mode de maintien (390, 510).

6. Procédé selon l'une quelconque des revendications précédentes, **caractérisé en ce que** la machine de compression/détendeur (10) marche en tant que machine de compression (10a), que l'ensemble de commande de fonctionnement (340, 440) est réalisé en tant qu'ensemble de commande de fonctionnement de compresseur (340) et comprend un convertisseur (360) qui présente un redresseur (362) qui alimente un circuit intermédiaire CC (364) à partir d'un réseau d'alimentation CA (344) et que le convertisseur (360) présente un onduleur (368) qui alimente l'ensemble moteur (132a) de la machine de compression (10a) à partir du circuit intermédiaire CC (364).

7. Procédé selon l'une quelconque des revendications 1 à 5, **caractérisé en ce que** la machine de compression/détendeur marche en tant que détendeur (10b), que l'ensemble de commande de fonctionnement est réalisé en tant qu'ensemble de commande de fonctionnement de détendeur (440) et présente un convertisseur (460) qui présente un onduleur réseau (462) qui est lui-même relié à un réseau d'alimentation CA (444) et injecte dans un circuit intermédiaire CC (464) de l'énergie à partir du réseau d'alimentation ou injecte dans le réseau d'alimentation (444) de l'énergie provenant du circuit intermédiaire CC (464), que l'ensemble de commande de fonctionnement de détendeur (440) présente un onduleur de compresseur (468) qui alimente à partir du circuit intermédiaire CC (464) un moteur (404) pour un compresseur (402) pour un circuit (400) fonctionnant dans un cycle thermodynamique, que l'ensemble de commande de fonctionnement de détendeur (440) présente un onduleur de générateur (470) qui injecte dans le circuit intermédiaire CC (464) de l'énergie amenée par l'ensemble de générateur (132b) .

8. Procédé de fonctionnement d'un circuit de fluide frigorigène (300), en particulier d'un dispositif de refroidissement ou d'une pompe à chaleur ou d'une installation de compression de vapeur, comprenant un échangeur thermique (302) dans lequel le fluide frigorigène détendu absorbe de la chaleur, une machine de compression (10a) pour comprimer le fluide frigorigène détendu et un échangeur thermique (322) dans lequel le fluide frigorigène comprimé dégage de la chaleur, ainsi qu'un ensemble de détente (330) pour détendre le fluide frigorigène comprimé, **caractérisé en ce que** la machine de compression (10a) fonctionne selon l'une quelconque des revendications 1 à 7.

9. Procédé de fonctionnement d'un cycle thermodynamique (400), en particulier d'une installation à cycle organique de Rankine ou d'une installation de détente de vapeur, comprenant un compresseur (402) pour comprimer le fluide de travail, un échangeur thermique (412) pour chauffer le fluide de travail, un détendeur (10b) pour détendre le fluide de travail comprimé et chauffé et un échangeur thermique (424) pour refroidir le fluide de travail détendu, **caractérisé en ce que** le détendeur (10b) fonctionne selon l'une quelconque des revendications 1 à 6 et 8 précédentes.

10. Machine de compression/détendeur pour fonctionner dans un circuit (300, 400) pour un fluide de travail, dans laquelle la machine de compression/détendeur (10) présente un carter de machine (11) avec un carter de rotor hélicoïdal (12) dans lequel au moins un rotor hélicoïdal (36, 38) disposé entre un côté basse pression (62) et un côté haute pression (64) est disposé pour comprimer/détendre le fluide de travail et est couplé à un ensemble moteur/générateur (132),
**caractérisée en ce que** pour le fonctionnement de la machine de compression/détendeur (10a, b) un ensemble de commande de fonctionnement (340, 440) est prévu, qui dans le cas d'une fin du fonctionnement de la machine de compression/détendeur (10a, b) fait fonctionner l'ensemble moteur/générateur (132a, b) selon une courbe de vitesse de rotation prédéterminée jusqu'à l'atteinte d'une plage de vitesses de rotation les plus basses (NDB) de l'au moins l'un des rotors hélicoïdaux (36, 38) empêchant des endommagements dans la zone des rotors hélicoïdaux (36, 38), que l'ensemble de commande de fonctionnement (340, 440) continue à faire fonctionner l'ensemble moteur/générateur (132a, b) après la rampe de décélération (BR) dans la plage de vitesses de rotation les plus basses (NDB) de l'au moins un rotor hélicoïdal (36, 38), laquelle entraîne une vitesse de rotation de l'au moins l'un des rotors hélicoïdaux (36, 38) tellement faible que dans la zone de la fente d'étanchéité (130) entre la surface d'extrémité côté haute pression (122, 124) de l'au moins l'un des rotors hélicoïdaux (36, 38) et la surface de paroi d'extrémité (126, 128) correspondante aucun(e) abrasion, échauffement ou surchauffe ne se produit et que la plage de vitesses de rotation les plus basses (NDB) s'étend à partir d'une vitesse de rotation de l'au moins l'un des rotors hélicoïdaux (36, 38) de 20 Hz à 0 Hz, que l'ensemble de commande de fonctionnement (340, 440) maintient la plage de vitesses de rotation les plus basses (NDB) de l'au moins un rotor hélicoïdal (36, 38) pendant un temps de maintien (HT) prédéterminé qui est d'au moins 3 secondes.

11. Machine de compression/détendeur selon la revendication 10, **caractérisée en ce que** la courbe de vitesse de rotation de l'ensemble moteur/générateur est prédéterminée par une séquence chronologique successive de données de vitesse de rotation, en particulier que les données de vitesse de rotation chronologiques successives présentent des valeurs de vitesse de rotation successives de plus en plus basses, en particulier que les valeurs de vitesse de rotation forment une rampe de décélération (BR) dans le temps, en particulier que les valeurs de vitesse de rotation de la rampe de décélération (BR) diminuent selon au moins un gradient (Δ1, Δ2) dans le temps, en particulier que la rampe de décélération (BR) présente une rampe de démarrage de freinage (BSR) pour laquelle les valeurs de vitesse de rotation diminuent selon un premier gradient (Δ1) dans le temps et/ou qu'en particulier la rampe de décélération (BR) présente une rampe de freinage final (EBR) suivant la rampe de démarrage de freinage (BSR), pour laquelle les valeurs de vitesse de rotation diminuent selon un second gradient (Δ2) dans le temps.

12. Machine de compression/détendeur selon l'une quelconque des revendications 10 à 11 précédentes, caractérisée en particulier en ce que le temps de maintien (HT) est d'au moins 5 secondes, en particulier que le temps de maintien (HT) est maintenu aussi longtemps qu'il peut être supposé qu'il n'y a plus de différences de pression agissant sur les rotors hélicoïdaux (36, 38) entre le côté basse pression (62) et le côté haute pression (64) dans la machine de compression/détendeur (10a, b) et/ou qu'en particulier le temps de maintien (HT) est de trois minutes maximum et/ou qu'en particulier l'ensemble de commande de fonctionnement (340, 440) maintient la plage de vitesses de rotation les plus basses (NDB) de l'au moins un rotor hélicoïdal (36, 38) jusqu'à ce qu'il n'y ait plus de différences de pression agissant en accélération sur les rotors hélicoïdaux (36, 38) entre le côté basse pression (62) et le côté haute pression (64) dans la machine de compression/détendeur (10a, b).

13. Machine de compression/détendeur selon l'une quelconque des revendications 10 à 12 précédentes, **caractérisée en ce que** l'ensemble de commande de fonctionnement (340, 440) dans le fonctionnement normal de la machine de compression/détendeur (10a, b) marche dans un mode de fonctionnement normal (382, 502), en particulier que l'ensemble de commande de fonctionnement (340, 440) dans le mode de fonctionnement normal (382, 502) est surveillé par un mode de surveillance (384, 504) qui détecte des signaux qui exigent une fin du fonctionnement de l'ensemble compresseur/détendeur (10a, b), et que l'ensemble de commande de fonctionnement (340, 440) passe dans un mode de fin de fonctionnement (386, 506) en présence d'un tel signal, en particulier que dans le mode de fin de fonctionnement (386, 506) l'ensemble moteur/générateur (132a, b) fonctionne selon la courbe de vitesse de rotation prédéterminée pour terminer le fonctionnement de la machine de compression/détendeur (10a, b) et/ou qu'en particulier le mode de fin de fonctionnement (386, 506) est surveillé par un mode de surveillance de vitesse de rotation (388, 508), qui détecte une atteinte de la plage de vitesses de rotation les plus basses (NDB) de l'au moins un rotor hélicoïdal (36, 38), en particulier que le mode de surveillance de vitesse de rotation (388, 508) à l'atteinte de la plage de vitesses de rotation les plus basses (NDB) initie un passage dans un mode de maintien (390, 510) dans lequel un maintien de la vitesse de rotation de l'au moins l'un des rotors hélicoïdaux (36, 38) dans la plage de vitesses de rotation les plus basses (NDB) s'effectue pendant un temps de maintien (HT) défini, qui assure qu'à la fin de celui-ci il n'y a pas de différences de pression agissant en accélération sur l'au moins un rotor hélicoïdal (36, 38), en particulier que le mode de surveillance de vitesse de rotation (388, 508) à l'atteinte de la plage de vitesses de rotation les plus basses (NDB) initie un passage dans un mode de maintien (390, 510) dans lequel un maintien de la vitesse de rotation de l'au moins un rotor hélicoïdal (36, 38) dans la plage de vitesses de rotation les plus basses (NDB) s'effectue jusqu'à ce qu'aucune différence de pression agissant en accélération sur l'au moins un rotor hélicoïdal (36, 38) ne soit présente.

14. Machine de compression/détendeur selon la revendication 13, **caractérisée en ce que** l'ensemble de commande de fonctionnement (340, 440) active une décharge de pression (350, 450) entre le côté basse pression (62) et le côté haute pression (64) de la machine de compression/détendeur pendant le mode de fin de fonctionnement (386, 506) et/ou pendant le mode de maintien (390, 510).

15. Machine de compression selon l'une quelconque des revendications 10 à 14, **caractérisée en ce que** l'ensemble de commande de fonctionnement (340, 440) est réalisé en tant qu'ensemble de commande de fonctionnement de compresseur (340) et comprend un convertisseur (360), qui présente un redresseur (362) qui alimente à partir d'un réseau d'alimentation CA (344) un circuit intermédiaire CC (364) et que le convertisseur (360) présente un onduleur (368) qui alimente à partir du circuit intermédiaire CC (364) l'ensemble moteur (132a) de la machine de compression (10a).

16. Machine de détente selon l'une quelconque des revendications 10 à 14, **caractérisée en ce que** l'ensemble de commande de fonctionnement est réalisé en tant qu'ensemble de commande de fonctionnement de détendeur (440) et présente un convertisseur (460) qui présente un onduleur de réseau (462) qui est lui-même relié à un réseau d'alimentation CA (444) et injecte dans un circuit intermédiaire CC (464) de l'énergie à partir du réseau d'alimentation ou injecte dans le réseau d'alimentation (444) de l'énergie provenant du circuit intermédiaire CC (464), que l'ensemble de commande de fonctionnement de détendeur (440) présente un onduleur de compresseur (468) qui alimente à partir du circuit intermédiaire CC (464) un moteur (404) pour un compresseur (402) pour un circuit (400) fonctionnant dans un cycle thermodynamique, que l'ensemble de commande de fonctionnement de détendeur (440) présente un onduleur de générateur (470) qui injecte de l'énergie amenée par l'ensemble de générateur (132b) dans le circuit intermédiaire CC (464).

17. Circuit de fluide frigorigène (300) en particulier d'un dispositif de refroidissement ou d'une pompe à chaleur, comprenant un échangeur thermique (302) dans lequel le fluide frigorigène détendu absorbe de la chaleur, une machine de compression (10a) pour comprimer le fluide frigorigène détendu et un échangeur thermique (322) dans lequel le fluide frigorigène comprimé dégage de la chaleur, ainsi qu'un ensemble de détente (330) pour détendre le fluide frigorigène comprimé, **caractérisé en ce que** la machine de compression (10a) est réalisée selon l'une quelconque des revendications 10 à 16.

18. Cycle thermodynamique (400), en particulier d'une installation à cycle organique de Rankine ou d'une installation de détente de vapeur, comprenant un compresseur (402) pour comprimer le fluide de travail, un échangeur thermique (412) pour chauffer le fluide de travail, un détendeur (10b) pour détendre le fluide de travail comprimé et chauffé et un échangeur thermique (424) pour refroidir le fluide de travail détendu, **caractérisé en ce que** le détendeur (10b) est réalisé selon l'une quelconque des revendications 10 à 14 et 16 précédentes.
